# EUROPÄISCHE PATENTSCHRIFT

(11) **EP 3 297 915 B1**
(45) Veröffentlichungstag und Bekanntmachung des Hinweises auf die Patenterteilung: **02.01.2019**
(21) Anmeldenummer: 16713487.3
(22) Anmeldetag: 04.04.2016
(51) Int. Cl.: B64D 11/06, B60N 2/90

(54) **FLUGGASTSITZVORRICHTUNG**
FLIGHT PASSENGER SEATING DEVICE
DISPOSITIF DE SIÈGE DE PASSAGER D'AÉRONEF

(30) Priorität: 20.05.2015 DE 102015107988
(43) Veröffentlichungstag der Anmeldung: 28.03.2018
(73) Patentinhaber: Recaro Aircraft Seating GmbH & Co. KG, 74523 Schwäbisch Hall (DE)
(72) Erfinder: JAKUBOWSKI, Jens, 73527 Schwäbisch Gmünd (DE); MEJUHAS, Marsel, 74523 Schwäbisch Hall (DE); DOBRITZ, Anne, 74523 Schwäbisch Hall (DE)
(74) Vertreter: Daub, Thomas
(86) Internationale Anmeldenummer: PCT/EP2016/057358
(87) Internationale Veröffentlichungsnummer: WO 2016/184597

(56) Entgegenhaltungen:
- EP-A2- 1 564 139
- US-A- 4 509 795
- US-A1- 2002 063 449
- US-A1- 2010 244 534
- US-A1- 2015 108 817

## Beschreibung

### Stand der Technik

Die Erfindung betrifft eine Fluggastsitzvorrichtung nach dem Oberbegriff des Patentanspruchs 1.

Es ist bereits eine Fluggastsitzvorrichtung vorgeschlagen worden, mit einem Fluggastsitz, der wenigstens einen Sitzboden und wenigstens ein Beinabstützmodul aufweist, das wenigstens ein Beinabstützelement umfasst, das zu dem Sitzboden wenigstens teilweise beweglich ausgebildet ist.

US2002/0063449 A1 zeigt eine gattungsgemäße Fluggastsitzvorrichtung mit einem Sitzboden, einem Beinabstützmodul, einem Beinabstützelement sowie Dreh-und Linearlagereinheiten.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fluggastsitzvorrichtung mit einem Fluggastsitz, der wenigstens einen Sitzboden und wenigstens ein Beinabstützmodul aufweist, das wenigstens ein Beinabstützelement umfasst, das zu dem Sitzboden wenigstens teilweise beweglich ausgebildet ist.

Es wird vorgeschlagen, dass das Beinabstützmodul wenigstens zwei Drehlagereinheiten und eine Linearlagereinheit umfasst, mittels denen das Beinabstützelement beweglich zu dem Sitzboden gelagert ist. Unter einem "Fluggastsitz" soll dabei insbesondere ein Sitz verstanden werden, der in einer Flugzeugkabine eines Flugzeugs aufgeständert ist. Dabei ist der Fluggastsitz vorzugsweise als Teil einer von mehreren nebeneinander angeordneten Fluggastsitzen ausgebildet. Der Fluggastsitz umfasst dabei insbesondere wenigstens einen Sitzboden, der einen Sitzbereich für einen Passagier ausbildet, eine Rückenlehne, die eine Rückenlehnenauflagefläche bereitstellt, an der sich ein auf dem Fluggastsitz sitzender Passagier mit seinem Rücken abstützen kann, und wenigstens eine Armlehne, auf der der Passagier einen Arm zumindest teilweise ablegen kann. Unter einem "Sitzboden" soll dabei insbesondere ein Teil des Fluggastsitzes verstanden werden, der einen Sitzbereich bereitstellt, auf dem ein Passagier, insbesondere während eines Flugs, sitzen kann, wobei der Sitzboden dabei vorzugsweise wenigstens einen Grundkörper und ein auf dem Grundkörper angeordnetes Polsterelement aufweist. Unter einem "Beinabstützmodul" soll dabei insbesondere ein Modul mit wenigstens einem Beinabstützelement und wenigstens dessen Lagerung verstanden werden, mittels dessen das Beinabstützmodul befestigbar, insbesondere an dem Fluggastsitz befestigbar ist. Unter "wenigstens teilweise beweglich" soll dabei insbesondere verstanden werden, dass ein Element, wie insbesondere das Beinabstützmodul, über seine Lagerung zumindest in einem definierten Bereich bewegbar ist. Unter einem "Beinabstützelement" soll dabei insbesondere ein Element verstanden werden, das eine Auflagefläche bereitstellt, die dazu vorgesehen ist, dass ein auf dem Fluggastsitz sitzender Passagier in zumindest einer Stellung des Beinabstützelements sein Bein und/oder seinen Fuß ablegen kann. Dabei umfasst das Beinabstützelement vorzugsweise ein Polsterelement, das die Auflagefläche ausbildet. Unter einer "Drehlagereinheit" soll dabei insbesondere eine Lagereinheit verstanden werden, die wenigstens eine Drehachse umfasst, um die die wenigstens zwei, durch die Drehlagereinheit miteinander verschwenkbar gekoppelten Elemente zueinander verdrehbar sind. Unter einer "Linearlagereinheit" soll dabei insbesondere eine Lagereinheit verstanden werden, die wenigstens eine Verschiebeachse aufweist, zu der die wenigstens zwei, durch die Linearlagereinheit miteinander verschiebbar gekoppelten Elemente zueinander verschiebbar sind. Unter "beweglich zu dem Sitzboden gelagert", soll dabei insbesondere verstanden werden, dass ein Element, wie insbesondere das Beinabstützelement, relativ zu dem Sitzboden bewegt werden kann, wobei das Beinabstützelement, dabei an einem beliebigen Element des Fluggastsitzes angebunden sein kann und nicht direkt an den Sitzboden angebunden sein muss. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann das Beinablageelement des Beinablagemoduls besonders vorteilhaft von einem Passagier in eine für ihn komfortable Position gebracht werden. Dadurch kann eine erfindungsgemäße Fluggastsitzvorrichtung bereitgestellt werden, die einen besonders hohen Komfort für einen auf dem Fluggastsitz, der die Fluggastsitzvorrichtung aufweist, sitzenden Passagier aufweist.

Weiter wird vorgeschlagen, dass das Beinabstützmodul direkt an dem Fluggastsitz angebracht ist. Unter "direkt angebracht" soll dabei insbesondere verstanden werden, dass das Beinabstützmodul direkt an einem Teil des Fluggastsitzes oder an einer den Fluggastsitz umgebenden Struktur angebracht ist, für dessen Passagier das Beinabstützmodul mit seinem Beinabstützelement eine Auflagefläche für ein Bein und/oder einen Fuß bereitstellt. Dabei ist das Beinabstützmodul insbesondere nicht an einem anderen Modul in dem Flugzeug angebunden, insbesondere auch nicht an einer Rückseite eines weiteren Fluggastsitzes, der in einer Flugrichtung vor dem Fluggastsitz angeordnet ist, dem das entsprechende Beinabstützmodul zugeordnet ist. Dadurch kann das Beinabstützmodul besonders vorteilhaft angebunden werden.

Weiterhin wird vorgeschlagen, dass der Fluggastsitz wenigstens eine Grundstruktur aufweist, an der das Beinabstützmodul angebracht ist. Unter einer "Grundstruktur des Fluggastsitzes" soll dabei insbesondere eine tragende Struktur des Fluggastsitzes verstanden werden. Dabei sind jegliche Bauteile des Fluggastsitzes, über die eine Kraft in eine Aufständereinheit des Fluggastsitzes abgeleitet werden kann, Teil der Grundstruktur. Dabei sind insbesondere ein vorderes Querrohr, ein hinteres Querrohr, ein Sitzteiler und/oder ein Sitzboden als Teil der Grundstruktur des Fluggastsitzes zu verstehen. Dadurch kann das Beinabstützmodul besonders vorteilhaft an den Fluggastsitz angebunden werden.

Zudem wird vorgeschlagen, dass der Fluggastsitz ein Querelement aufweist, an dem das Beinabstützmodul angebunden ist. Unter einem "Querelement" soll dabei insbesondere ein Element verstanden werden, das sich in einer Querrichtung des Fluggastsitzes, die orthogonal zu einer Sitzrichtung des Sitzes ausgerichtet ist, erstreckt. Dabei ist das Querelement vorzugsweise als ein vorderes Querelement ausgebildet, der sich an einem, in Sitzrichtung gesehen, vorderen Ende des Sitzes in Querrichtung erstreckt. Dabei ist das Querelement vorzugsweise als ein vorderes Tragrohr ausgebildet. Dabei ist es grundsätzlich auch denkbar, dass das vordere Querelement als ein anderes Bauteil des Fluggastsitzes ausgebildet ist, das an einem vorderen Ende des Sitzes angeordnet ist, wie beispielsweise ein Sitzboden. Dadurch kann das Beinabstützmodul besonders einfach an den Fluggastsitz angebunden werden.

Es wird weiterhin vorgeschlagen, dass das Beinabstützmodul eine Abdeckeinheit aufweist, die in wenigstens einem Betriebszustand einen Bereich zwischen dem Sitzboden und dem Beinabstützelement abdeckt. Unter einer "Abdeckeinheit" soll dabei insbesondere eine Einheit verstanden werden, die wenigstens ein flächiges Element umfasst, das dazu vorgesehen ist, einen bestimmten Bereich abzudecken und eine Abstützfläche für einen Passagier bereitzustellen, auf der der Passagier sich insbesondere mit Teilen seiner Beine abstützen kann. Dadurch kann vorteilhaft, insbesondere in einem Betriebszustand, in dem das Beinabstützelement von dem Sitzboden entfernt angeordnet ist, ein Bereich zwischen dem Sitzboden und dem Beinabstützelement überspannt und so eine Abstützfläche für ein Bein eines auf dem Fluggastsitz sitzenden Passagiers bereitgestellt werden.

Außerdem wird vorgeschlagen, dass die Abdeckeinheit wenigstens ein Textil- oder Lederelement umfasst, das in dem wenigstens einen Betriebszustand den Bereich zwischen dem Sitzboden und dem Beinabstützelement abdeckt. Unter einem "Textil- oder Lederelement" soll dabei insbesondere ein flächiges Element aus einem Textil oder einem Leder, vorzugsweise insbesondere aus einem Netz, verstanden werden, das vorzugsweise elastisch dehnbar ausgebildet ist. Grundsätzlich ist es auch denkbar, dass das Textil- oder Lederelement als Teil eines ausrollbaren Rollosystems ausgebildet ist, das je nach Abstand zwischen dem Sitzboden und dem Beinabstützelement auf einer Rolle eingerollt werden kann. Grundsätzlich ist es ebenso denkbar, dass das Textil- oder Lederelement als Teil eines Faltsystems ausgebildet ist, das in einer Art Ziehharmonika-System gefaltet ist und zusammen mit wenigstens einem elastischen Band verbunden ist und so durch Auseinanderziehen verlängert werden kann und sich über das elastische Band wieder in eine Ausgangsstellung zurückbewegt. Dadurch kann die Abdeckeinheit besonders einfach ausgebildet werden.

Es wird weiter vorgeschlagen, dass das Beinabstützelement mittels der Linearlagereinheit um wenigstens 50 mm verfahren werden kann. Unter "wenigstens 50 mm" soll dabei insbesondere verstanden werden, dass die Linearlagereinheit um zumindest 50 mm, vorzugsweise um zumindest 100 mm und in einer besonders vorteilhaften Ausgestaltung um zubindest 150 mm verfahren werden kann. Dadurch kann das Beinabstützelement vorteilhaft flexibel auf verschiedene Stellungen eingestellt werden.

Ferner wird vorgeschlagen, dass das Beinabstützmodul wenigstens einen Rückstellmechanismus aufweist, der für eine selbsttätige Rückstellbewegung des Beinabstützelements aus einer ausgefahrenen Stellung vorgesehen ist. Unter einem "Rückstellmechanismus" soll dabei insbesondere ein Mechanismus verstanden werden, der wenigstens ein Hebelelement aufweist und der dazu vorgesehen ist, eine Bewegung eines ersten Elements in eine zweite, von der Bewegung des ersten Elements abhängige Bewegung eines weiteren Elements umzusetzen. Unter einer "selbsttätigen Rückstellbewegung" soll dabei insbesondere verstanden werden, dass das Beinabstützelement aus einem ausgefahrenen Zustand bei einer Verschwenkbewegung zurück in seine Verstaustellung automatisch ohne zusätzliche Korrekturbewegungen durch einen Passagier eine richtige Position und Orientierung für die Verstaustellung einnimmt. Dabei wird bei der selbsttätigen Rückstellbewegung vorzugsweise die Linearlagereinheit aus einer aus der Minimalstellung heraus verstellten Stellung zurück in die Minimalstellung verschoben. Grundsätzlich ist es auch denkbar, dass die zweite Drehlagereinheit bei der selbsttätigen Rückstellbewegung durch den Rückstellmechanismus in eine neutrale Position zurückgestellt wird. Dadurch kann das Beinabstützmodul besonders einfach in eine Verstaustellung überführt werden.

Weiterhin wird vorgeschlagen, dass der Rückstellmechanismus dazu vorgesehen ist, eine Verstellung der Linearlagereinheit zurückzustellen. Unter einer "Verstellung der Linearlagereinheit" soll dabei insbesondere eine Verschiebung der Linearlagereinheit aus einer Minimalstellung heraus verstanden werden. Dadurch kann die Rückstelleinheit besonders einfach ausgebildet werden.

Weiter wird vorgeschlagen, dass der Rückstellmechanismus wenigstens ein Führungselement aufweist, das wenigstens eine Führungsbahn ausbildet, die sich von einer Geraden unterscheidet. Unter einem "Führungselement" soll dabei vorzugsweise ein Element verstanden werden, das bei einer Relativbewegung des Elements zu einem anderen Element dazu vorgesehen ist, das andere Element in einer definierten Weise zu führen. Dabei ist das Führungselement vorzugsweise als eine Nut ausgebildet, wobei es grundsätzlich auch denkbar ist, dass das Führungselement als eine Führungsschiene oder eine Erhebung ausgebildet ist. Unter einer "Führungsbahn, die sich von einer Geraden unterscheidet", soll dabei insbesondere eine Führungsbahn verstanden werden, die vorzugsweise kreisbahnförmig ausgebildet ist, aber auch ellipsenförmig ausgebildet sein kann. Dadurch kann der Rückstellmechanismus für eine selbsttätige Rückstellbewegung besonders einfach ausgeführt werden.

Zudem wird vorgeschlagen, dass der Rückstellmechanismus wenigstens ein Hebelelement aufweist, das eine Lagerachse aufweist, die parallel zu einer Schwenkachse der ersten Drehlagereinheit verschoben ist. Dadurch kann vorteilhaft eine Relativbewegung zwischen den Teilen des Rückstellmechanismus und Teilen des Beinabstützmoduls erreicht werden, durch die die selbsttätige Rückstellbewegung einfach generiert werden kann.

Ferner wird vorgeschlagen, dass der Rückstellmechanismus wenigstens ein Hebelelement aufweist, das eine Lagerung aufweist, die als ein Taumellager ausgebildet ist. Unter einem "Taumellager" soll dabei insbesondere ein Lager mit einem Innenlagerelement und einem auf dem Innenlagerelement um eine Lagerachse drehbar gelagerten Außenlagerelement verstanden werden, wobei das Außenlagerelement bei einer Verdrehung zu dem Innenlagerelement zu dem Innenlagerelement verkippt wird. Dadurch kann das Hebelelement vorteilhaft Bewegungen parallel zu einer Schwenkachse seiner Lagerung ausgleichen.

Es wird weiter vorgeschlagen, dass der Rückstellmechanismus zumindest in einer Stellung dazu vorgesehen ist, die Linearlagereinheit zu sperren. Dadurch kann vorteilhaft verhindert werden, dass das Beinabstützelement in einer Verstaustellung über die Linearlagereinheit verstellbar ist.

Ferner wird vorgeschlagen, dass das Beinabstützmodul lediglich einen Aktuator aufweist, der für eine Verstellung des Beinabstützelements vorgesehen ist. Unter einem "Aktuator" soll dabei insbesondere ein Element verstanden werden, das zumindest in einem betätigten Zustand eine Betätigungskraft bereitstellen kann. Dabei ist der Aktuator vorzugsweise als eine Gasdruckfeder ausgebildet. Dadurch kann das Beinabstützmodul einfach und kostengünstig ausgebildet werden.

Es wird weiter vorgeschlagen, dass das Beinabstützmodul mittig unter dem Sitzboden angebunden ist. Unter "mittig unter dem Sitzboden" soll dabei verstanden werden, dass ein Abstand der Anbindung des Beinabstützmoduls an den Fluggastsitz zu der einen Seite des Sitzbodens gleich groß ist wie der Abstand der Anbindung zu der gegenüberliegenden Seite des Sitzbodens. Dadurch kann das Beinabstützmodul besonders vorteilhaft an dem Fluggastsitz angebracht werden.

Zudem wird vorgeschlagen, dass das Beinabstützmodul zumindest ein Rettungswestenbehältnis umfasst, das zumindest teilweise in das Beinabstützmodul integriert ist. Unter einem "Rettungswestenbehältnis" soll dabei insbesondere ein Behältnis verstanden werden, dass einen Raum zumindest im Wesentlichen einschließt, in dem eine Rettungsweste, wie insbesondere eine Schwimmweste, gelagert ist und im Bedarfsfall einfach entnommen werden kann. Dabei weist das Rettungswestenbehältnis vorzugsweise eine Öffnung auf, die vorzugsweise über wenigstens ein Schließelement verschlossen werden kann, wobei über die Öffnung in einem geöffneten Zustand des Schließelements die Rettungsweste aus dem Rettungswestenbehältnis entnommen werden kann. Dabei weist das Rettungswestenbehältnis vorzugsweise ein Sicherungselement auf, das als ein Siegel ausgebildet und dazu vorgesehen ist, zerstört zu werden, wenn das Rettungswestenbehältnis geöffnet wird, um mögliche Manipulationen an dem Rettungswestenbehältnis zu erkennen. Das Schließelement ist dabei vorzugsweise als eine schwenkbare Klappe ausgebildet. Grundsätzlich sind auch anders bewegliche Schließelemente zum Verschließen des Rettungswestenbehältnis denkbar. Dadurch kann das Beinabstützmodul besonders vorteilhaft ausgebildet werden.

Weiter wird vorgeschlagen, dass das Beinabstützelement im Bezug auf den Sitzboden außermittig an das Querelement angebunden ist. Unter "außermittig angebunden" soll dabei insbesondere verstanden werden, dass das zumindest eine Element zur Anbindung des Beinabstützelements an dem Querelement, in einer Querrichtung gesehen von einer Mitte des Beinabstützelements beabstandet angeordnet ist. Dabei sind die Elemente zur Anbindung, wie insbesondere die Linearlagereinheit und/oder die Drehlagereinheiten vorzugsweise lediglich in einer Hälfte des Beinabstützelements angeordnet, wobei die gegenüberliegende Hälfte frei von der Linearlagereinheit und/oder den Drehlagereinheiten ist, und vorzugsweise andere Elemente, wie insbesondere das Rettungswestenbehältnis in der der Linearlagereinheit und/oder den Drehlagereinheiten gegenüberliegenden Hälfte des Beinabstützelements angeordnet ist. Dadurch kann besonders vorteilhaft ein Bereich bereitgestellt werden, in dem das Rettungswestenbehältnis vorteilhaft und einfach angeordnet werden kann.

Zudem wird vorgeschlagen, dass die Linearlagereinheit zumindest zwei parallel verlaufende Führungen aufweist. Dadurch kann für die außermittige Linearlagereinheit eine besonders vorteilhafte Stabilität erreicht werden, wodurch insbesondere ein Verkanten verhindert werden kann.

Die erfindungsgemäße Fluggastsitzvorrichtung soll hierbei nicht auf die oben beschriebene Anwendung und Ausführungsform beschränkt sein. Insbesondere kann die erfindungsgemäße Fluggastsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Fluggastsitzvorrichtung in einem ersten Ausführungsbeispiel mit einem Teil eines Fluggastsitzes und einem Beinabstützmodul in einer Verstaustellung,
- Fig. 2: eine schematische Darstellung des Fluggastsitzes und des Beinabstützmoduls in einer ausgefahrenen Nutzstellung mit einem Beinabstützelement,
- Fig. 3: eine schematische Ansicht des Beinabstützmoduls mit einem Rückstellmechanismus und dem Beinabstützelement,
- Fig. 4: eine weitere schematische Darstellung des Beinabstützmoduls und des Beinabstützelements von vorne,
- Fig. 5: eine schematische Darstellung des Beinabstützmoduls von hinten,
- Fig. 6: eine schematische Darstellung von Drehlagereinheiten, einer Linearlagereinheit und des Rückstellmechanismus des Beinabstützmoduls in einer Verstaustellung,
- Fig. 7: eine schematische Darstellung der Drehlagereinheiten, der Linearlagereinheit und des Rückstellmechanismus des Beinabstützmoduls in einer Nutzstellung,
- Fig. 8: eine schematische Darstellung einer erfindungsgemäßen Fluggastsitzvorrichtung in einem zweiten Ausführungsbeispiel mit einem Teil eines Fluggastsitzes und einem Beinabstützmodul und einem Rettungswestenbehältnis und
- Fig. 9: eine schematische Darstellung des Beinabstützmoduls mit dem Rettungswestenbehältnis.

### Beschreibung der Ausführungsbeispiele

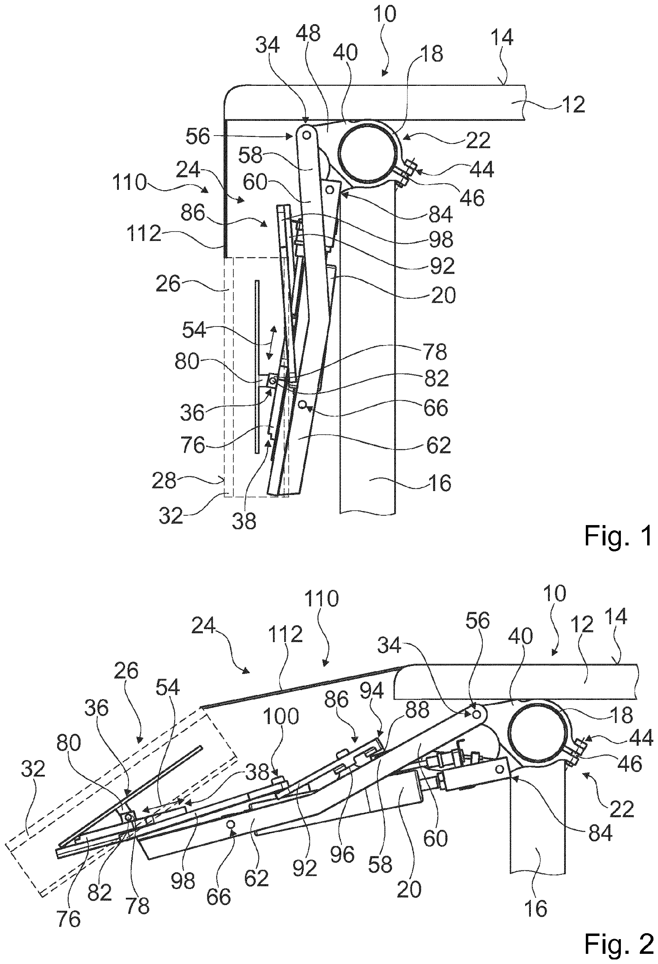

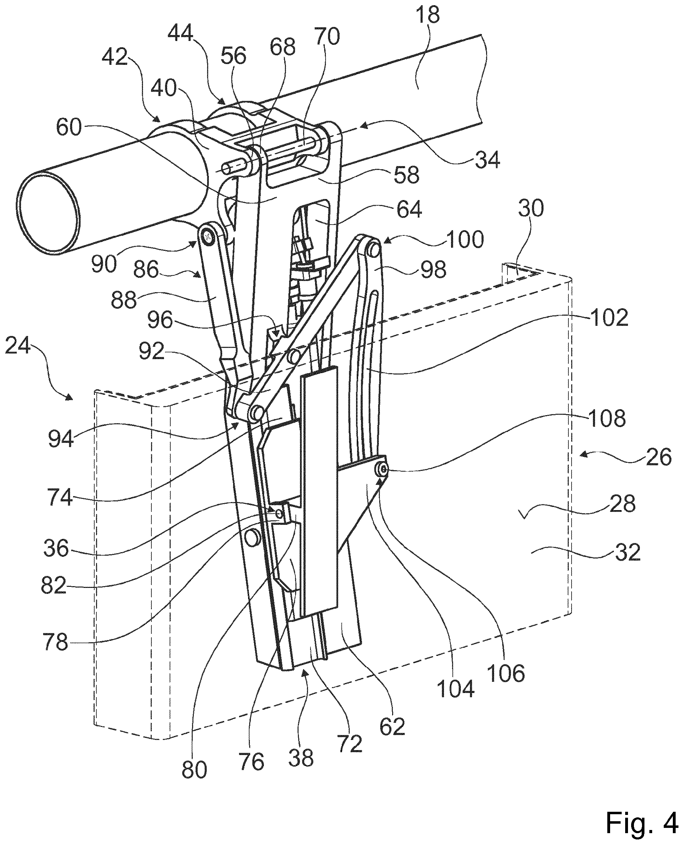

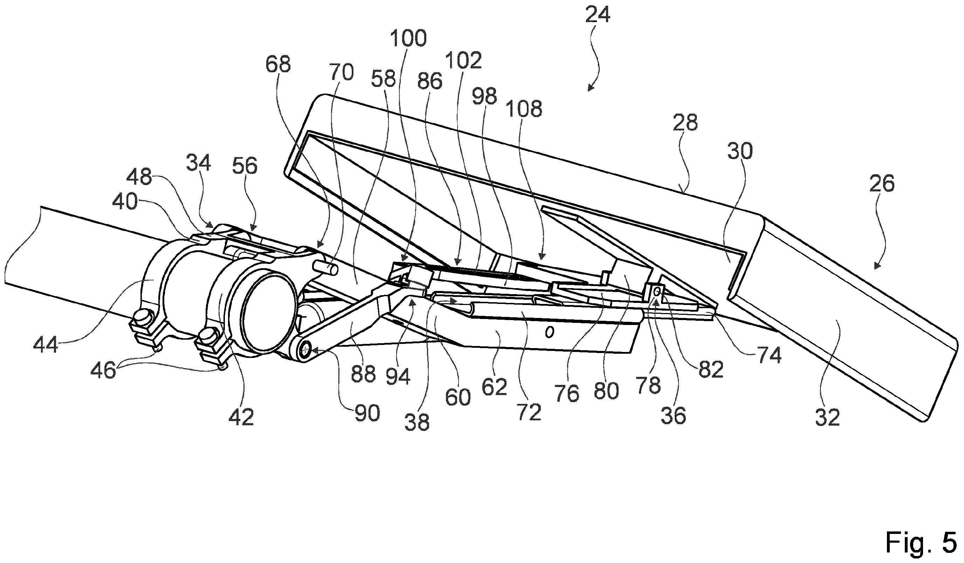

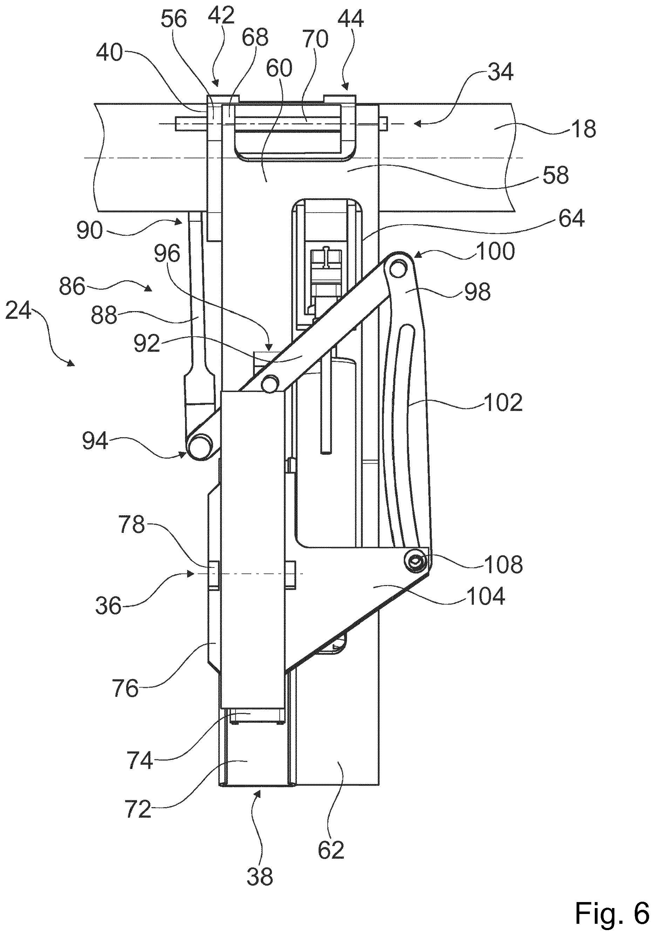

Die Figuren 1 bis 7 zeigen eine erfindungsgemäße Fluggastsitzvorrichtung in einem ersten Ausführungsbeispiel. Die Fluggastsitzvorrichtung umfasst einen Fluggastsitz 10. Der Fluggastsitz 10 umfasst einen Sitzboden 12, der eine Sitzfläche 14 für einen Passagier bereitstellt. Der Fluggastsitz 10 ist in einer Flugzeugkabine aufgeständert. Dazu weist der Fluggastsitz 10 eine Aufständereinheit 16 auf. Mittels der Aufständereinheit 16 ist der Fluggastsitz 10 fest auf einem Kabinenboden der Flugzeugkabine angeordnet. Der Fluggastsitz 10 weist ein erstes vorderes Querelement 18 und ein zweites hinteres Querelement auf. Die Querelemente 18 sind als Tragrohre ausgebildet. Der Fluggastsitz 10 ist dabei als ein Teil einer nicht näher dargestellten Sitzreihe ausgebildet. Die Sitzreihe umfasst dabei drei Fluggastsitze 10, die nebeneinander angeordnet sind. Die Querelemente 18 erstrecken sich quer unter den Fluggastsitzen 10 der Sitzreihe. Grundsätzlich ist es auch denkbar, dass die Sitzreihe eine andere Anzahl an Fluggastsitzen 10 aufweist oder als ein Einzelsitz ausgebildet ist. Der Fluggastsitz 10 umfasst eine Grundstruktur 22. Die beiden Querelemente 18, die Aufständereinheit 16 und der Sitzboden 12 sind Teil der Grundstruktur 22.

Der Fluggastsitz 10 weist ein Beinabstützmodul 24 auf. Das Beinabstützmodul 24 ist dazu vorgesehen, dass ein auf dem Fluggastsitz 10 sitzender Passagier seine Beine und/oder seine Füße darauf ablegen kann. Das Beinabstützmodul 24 ist direkt an der Grundstruktur 22 des Fluggastsitzes 10 angebunden. Dabei ist das Beinabstützmodul 24 an dem vorderen Querelement 18 der Grundstruktur 22 angebracht. Das Beinabstützmodul 24 umfasst ein Beinabstützelement 26. Grundsätzlich ist es auch denkbar, dass das Beinabstützmodul 24 mehrere Beinabstützelemente 26 umfasst. Das Beinabstützelement 26 bildet eine Abstützfläche 28 aus, die dazu vorgesehen ist, dass ein auf dem Fluggastsitz 10 sitzender Passagier sein Bein und/oder seinen Fuß darauf ablegen kann. Das Beinabstützelement 26 umfasst einen Grundkörper 30 und ein mit dem Grundkörper 30 verbundenes Polsterelement 32. Das Polsterelement 32 bildet die Abstützfläche 28 des Beinabstützelements 26 aus. Dabei umfasst das Polsterelement 32 einen nicht näher dargestellten, wechselbaren Bezug. Grundsätzlich ist es auch denkbar, dass das Polsterelement 32 keinen Bezug aufweist. Das Polsterelement 32, welches die Abstützfläche 28 ausbildet, weist dabei eine ergonomische Form auf, sodass ein Passagier sein Bein darauf besonders komfortabel ablegen kann. Der Grundkörper 30 ist dabei beispielsweise aus einem Blech oder einem Faserverbundwerkstoff gebildet. Grundsätzlich ist es auch denkbar, dass das Beinabstützelement 26 lediglich von einem Grundkörper und einer Bespannung oder einer Kombination aus einer Bespannung und einem Polsterelement ausgebildet ist.

Das Beinabstützelement 26 ist teilweise beweglich zu dem Sitzboden 12 des Fluggastsitzes 10 ausgebildet. Das Beinabstützelement 26 ist in verschiedenen Stellungen zu dem Sitzboden 12 verschwenk- und verschiebbar. Dabei ist das Beinabstützelement 26 von einem auf dem Fluggastsitz 10 sitzenden Passagier durch reine Muskelkraft in die verschiedenen Stellungen bewegbar. Das Beinabstützelement 26 weist dabei eine erste Maximalstellung und eine zweite Maximalstellung auf. Zwischen den beiden Maximalstellungen ist das Beinabstützelement 26 stufenlos verstellbar. Die erste Maximalstellung ist als eine Verstaustellung ausgebildet. In der als Verstaustellung ausgebildeten ersten Maximalstellung ist das Beinabstützelement 26 mit seiner Abstützfläche 28 im Wesentlichen orthogonal zu der Sitzfläche 14 des Sitzbodens 12 ausgerichtet und unterhalb des Sitzbodens 12 angeordnet. Dabei ist das Beinabstützelement 26 zwischen einer Unterseite des Sitzbodens 12 und dem Kabinenboden angeordnet. Aus der als Verstaustellung ausgebildeten ersten Maximalstellung kann das Beinabstützelement 26 um eine parallel zu dem Querelement 18 verlaufende erste Schwenkachse 50 geschwenkt werden. Dabei kann das Beinabstützelement 26 aus der als Verstaustellung ausgebildeten ersten Maximalstellung nach vorne, vor den Sitzboden 12 des Fluggastsitzes 10 geschwenkt werden. Eine zweite Maximalstellung ist als eine maximal ausgefahrene Nutzstellung ausgebildet. In der zweiten Maximalstellung ist das Beinabstützelement 26 aus der Verstaustellung maximal zu dem Sitzboden 12 verschwenkt und im Wesentlichen auf einer gleichen Höhe angeordnet wie der Sitzboden 12. In der zweiten Maximalstellung kann das Beinabstützelement 26 mit seiner Abstützfläche 28 parallel zu der Sitzfläche 14 des Sitzbodens 12 ausgerichtet sein.

Zur Verstellung des Beinabstützelements 26 weist das Beinabstützmodul 24 zwei Drehlagereinheiten 34, 36 und eine Linearlagereinheit 38 auf. Die erste Drehlagereinheit 34 ist dazu vorgesehen, das Beinabstützelement 26 zu dem Querelement 18 zu verschwenken. Dazu ist die Drehlagereinheit 34 unmittelbar an dem Querelement 18 angeordnet. Die erste Drehlagereinheit 34 weist eine Schwenkachse 50 auf, um die das Beinabstützelement 26 schwenkbar ist und die parallel zu einer Mittelachse des Querelements 18 ausgerichtet ist. Die zweite Drehlagereinheit 36 ist beabstandet zu der ersten Drehlagereinheit 34 angeordnet. Die zweite Drehlagereinheit 36 ist dazu vorgesehen, eine Ausrichtung des Beinabstützelements 26 zu dem Sitzboden 12 zu verstellen. Über die zweite Drehlagereinheit 36 ist das Beinabstützelement 26 zu der Sitzfläche 14 des Sitzbodens 12 verkippbar. Die zweite Drehlagereinheit 36 weist eine Schwenkachse 52 auf, die parallel zu der Schwenkachse 50 der ersten Drehlagereinheit 34 ausgerichtet ist. Grundsätzlich ist es auch denkbar, dass die Schwenkachse 52 der zweiten Drehlagereinheit 36 zu der Schwenkachse 50 der ersten Drehlagereinheit 34 leicht verdreht ist. Die zweite Drehlagereinheit 36 ist als ein Reiblager oder ein Rastlager ausgebildet, sodass verschiedene Stellungen von der zweiten Drehlagereinheit 36 sicher gehalten werden können. Ist die zweite Drehlagereinheit 36 beispielsweise als ein Reiblager ausgebildet, würden miteinander in Kontakt stehende Reibelemente einen Reibwert zwischen zueinander verdrehbaren Lagerelementen erhöhen, wodurch diese bis zu einer bestimmten Verstellkraft in einer aktuellen Stellung zueinander verharren würden. Ist die zweite Drehlagereinheit 36 beispielsweise als Rastlager ausgebildet, weist diese jeweils auf zwei zueinander verdrehbaren Lagerelementen mehrere Rastelemente auf, die zu stabilen Verdrehstellungen in verschiedenen Positionen ineinander einrasten. Die beiden Drehlagereinheiten 34, 36 bilden zwei parallel zueinander verschobene Drehpunkte aus. Die Linearlagereinheit 38 ist dazu vorgesehen, einen Abstand des Beinabstützelements 26 zu dem Sitzboden 12 zu verstellen. Dazu ist die Linearlagereinheit 38 funktionell zwischen der ersten Drehlagereinheit 34 und der zweiten Drehlagereinheit 36 angeordnet. Über die Linearlagereinheit 38 ist ein Abstand zwischen der ersten Drehlagereinheit 34 und der zweiten Drehlagereinheit 36 variabel. Dabei weist die Linearlagereinheit 38 eine Verschiebeachse 54 auf, entlang der die Linearlagereinheit 38 eine Verschiebung ermöglicht. Die Linearlagereinheit 38 ist dabei als ein Reiblager oder ein Rastlager ausgebildet.

Das Beinabstützmodul 24 umfasst ein erstes Halteelement 40. Das erste Halteelement 40 ist dazu vorgesehen, das Beinabstützmodul 24 an das Querelement 18 anzubinden. Das Halteelement 40 ist dabei mittig relativ zu dem Sitzboden 12 angeordnet. Dadurch ist das Beinabstützmodul 24 in einer Mitte des Sitzbodens 12 angeordnet. Grundsätzlich ist es ebenfalls denkbar, dass das Halteelement 40 und damit das Beinabstützmodul 24 außermittig zu dem Sitzboden 12 ausgerichtet sind. Das Halteelement 40 ist dabei als ein Schellenelement ausgebildet. Das Halteelement 40 weist zwei Haltebereiche 42, 44 auf, in denen das Halteelement 40 das Querelement 18 in einem montierten Zustand im Wesentlichen umschlingt. Die Haltebereiche 42, 44 sind an einem ersten Ende geöffnet ausgebildet und sind dort zur Befestigung an dem Querelement 18 jeweils durch ein Befestigungselement 46 verbindbar. Die Befestigungselemente 46 sind dabei als Schraubenelemente ausgebildet. Grundsätzlich ist es auch denkbar, dass die Befestigungselemente 46 als andere, dem Fachmann als sinnvoll erscheinende Elemente ausgebildet sind, wie beispielsweise als Nieten, Klammern oder andere Kraft- und/oder Formschlusselemente. Das Halteelement 40 ist dabei verdrehsicher mit dem Querelement 18 verbunden. Dazu weist das Beinabstützmodul 24 eine nicht näher dargestellte Verdrehsicherung auf, durch die das Halteelement 40 rotationsfest auf dem Querelement 18 angeordnet ist. Über das Halteelement 40 können durch die drehfeste Anbindung Drehmomente in das Querelement 18 eingeleitet werden. Das Halteelement 40 bildet einen Grundkörper 48 aus. Der Grundkörper 48 ist einstückig mit den Haltebereichen 42, 44 ausgebildet.

Das Beinabstützmodul 24 weist ein Trägerelement 58 auf. Das Trägerelement 58 ist dazu vorgesehen, das Beinabstützelement 26 mit dem Querelement 18 zu koppeln. Das Trägerelement 58 ist als eine flache Platte ausgebildet. Grundsätzlich ist es auch denkbar, dass das Trägerelement 58 als ein Profilelement ausgebildet ist, das grundsätzlich auch aus mehreren miteinander verbundenen Elementen gebildet sein kann. Dabei weist das als flache Platte ausgebildete Trägerelement 58 quer zu seiner Haupterstreckungsrichtung einen Knick auf. Das Trägerelement 58 weist in seiner Haupterstreckungsrichtung einen im Wesentlichen rechteckigen Querschnitt auf. Quer zu seiner Haupterstreckungsrichtung weist das Trägerelement 58 einen abgewinkelten Querschnitt auf. Ein erstes Ende des Trägerelements 58 ist in einem montierten Zustand dem Querelement 18 zugewandt. Ein zweites Ende des Trägerelements 58 ist in montiertem Zustand dem Beinabstützelement 26 zugewandt. Das Trägerelement 58 bildet einen ersten flachen Teilbereich 60 aus, der sich von dem ersten Ende des Trägerelements 58 bis zu dem Knick in dem Trägerelement 58 erstreckt. Das Trägerelement 58 bildet einen zweiten flachen Teilbereich 62 aus, der sich von dem Knick des Trägerelements 58 bis an das zweite Ende des Trägerelements 58 erstreckt. Das Trägerelement 58 weist eine Durchgangsausnehmung 64 auf. Die Durchgangsausnehmung 64 reicht von einer Oberseite bis zu einer Unterseite des Trägerelements 58. Die Durchgangsausnehmung 64 erstreckt sich von dem ersten flachen Teilbereich 60 über den Knick hinweg bis in den zweiten flachen Teilbereich 62. Die Durchgangsausnehmung 64 weist dabei eine im Wesentlichen rechteckige Form auf. Die Durchgangsausnehmung 64 weist eine Breite auf, die in etwa einer halben Breite des Trägerelements 58 selbst entspricht. An einem zweiten Ende der Durchgangsausnehmung 64, das dem zweiten Ende des Trägerelements 58 zugewandt ist, bildet die Durchgangsausnehmung 64 eine Aufnahme 66 aus. Die Aufnahme 66 umfasst ein Durchgangsloch, das sich quer zu der Haupterstreckung des Trägerelements 58 erstreckt. Das Durchgangsloch der Aufnahme 66 ist zur Aufnahme eines Befestigungselements, wie insbesondere eines Befestigungsbolzens vorgesehen.

Das Trägerelement 58 ist über die erste Drehlagereinheit 34 an das Querelement 18 angebunden. Das Trägerelement 58 ist mit seinem ersten Ende an die Drehlagereinheit 34 angebunden. Zur Anbindung des Trägerelements 58 bildet die erste Drehlagereinheit 34 ein erstes Lagerelement 56 aus. Das erste Lagerelement 56 ist von dem Grundkörper 48 des Halteelements 40 ausgebildet. Das erste Lagerelement 56 ist von zwei einstückig mit dem Grundkörper 48 des Halteelements 40 ausgebildeten Erhebungen ausgebildet, die jeweils ein Durchgangsloch aufweisen, wobei die Durchgangslöcher koaxial zueinander ausgerichtet sind. Die Durchgangslöcher in den Erhebungen des ersten Lagerelements 56 bilden jeweils eine Lagerstelle aus. Die erste Drehlagereinheit 34 bildet ein zweites Lagerelement 68 aus. Das zweite Lagerelement 68 der ersten Drehlagereinheit 34 wird von dem Trägerelement 58 ausgebildet. Das zweite Lagerelement 68 der ersten Drehlagereinheit 34 ist dabei an dem ersten Ende des Trägerelements 58 angeordnet. Das zweite Lagerelement 68, das von dem Trägerelement 58 ausgebildet wird, ist zu dem ersten Lagerelement 56, das von dem Grundkörper 48 des Halteelements 40 ausgebildet ist, korrespondierend ausgebildet. Das zweite Lagerelement 68 ist von zwei einstückig mit dem Trägerelement 58 ausgebildeten Erhebungen ausgebildet, die jeweils ein Durchgangsloch aufweisen, wobei die Durchgangslöcher koaxial zueinander ausgerichtet sind. Die Durchgangslöcher in den Erhebungen des zweiten Lagerelements 68 bilden jeweils eine Lagerstelle 84 aus. Die erste Drehlagereinheit 34 umfasst einen Lagerbolzen 70, über den das erste Lagerelement 56 und das zweite Lagerelement 68 der ersten Drehlagereinheit 34 verschwenkbar miteinander gekoppelt sind. Grundsätzlich ist es auch denkbar, dass die erste Drehlagereinheit 34 mehrere Lagerbolzen aufweist. Der Lagerbolzen 70 ist dabei durch die Durchgangslöcher in den Erhebungen der beiden Lagerelemente 56, 68 geführt. Durch nicht näher dargestellte Sicherungselemente ist der Lagerbolzen 70 in den Durchgangslöchern der Lagerelemente 56, 68 axial fixiert. Der Lagerbolzen 70 bildet die Schwenkachse 50 der ersten Drehlagereinheit 34 aus, um die sich die beiden Lagerelemente 56, 68 zueinander verschwenken lassen.

Das Beinabstützmodul 24 weist einen Aktuator 20 auf. Dabei weist das Beinabstützmodul 24 lediglich diesen einen Aktuator 20 auf. Der Aktuator 20 ist für die Verstellung des Beinabstützelements 26 vorgesehen. Der Aktuator 20 ist für eine Verdrehung des Beinabstützelements 26 um die Schwenkachse 50 der ersten Drehlagereinheit 34 vorgesehen. Der Aktuator 20 ist als eine Gasdruckfeder ausgebildet. Grundsätzlich ist es auch denkbar, dass der Aktuator 20 als ein Hydraulikzylinder oder ein anderer, dem Fachmann als sinnvoll erscheinender Aktuator ausgebildet ist. Der Aktuator 20 ist zwischen dem Halteelement 40 und dem Trägerelement 58 angeordnet. Mit einem ersten Ende ist der Aktuator 20 fest mit dem Halteelement 40 verbunden. Dazu weist der Grundkörper 48 des Halteelements 40 eine Lagerstelle 84 auf. Über die Lagerstelle 84 ist der Aktuator 20 an das Halteelement 40 angebunden. Dabei ist der Aktuator 20 über die Lagerstelle 84 schwenkbar an das Halteelement 40 angebunden. Mit einem zweiten Ende ist der Aktuator 20 fest mit dem Trägerelement 58 verbunden. Dabei ist der Aktuator 20 über die Aufnahme 66, die an dem zweiten Ende der Durchgangsausnehmung 64 in dem Trägerelement 58 angeordnet ist, an das Trägerelement 58 angebunden. Der Aktuator 20 ist dabei zumindest teilweise in der Durchgangsausnehmung 64 angeordnet. Dabei ist der Aktuator 20 über einen nicht näher dargestellten Lagerbolzen schwenkbar in der Aufnahme 66 des Trägerelements 58 angeordnet. Der Aktuator 20 ist dazu vorgesehen, in einem betätigten Zustand eine Kraft bereitzustellen, die das Halteelement 40 und das Trägerelement 58 auseinanderdrückt. Zur Bereitstellung der Kraft weist der Aktuator 20 einen Kraftspeicher und eine beweglich zu dem Kraftspeicher angeordnete Kolbenstange auf. Die Kolbenstange ist zu dem Kraftspeicher entlang einer Betätigungsachse axial verschiebbar. In dem unbetätigten Zustand ist der Aktuator 20 verriegelt und stellt keine Kraft bereit. In dem betätigten Zustand stellt der Aktuator 20 eine Kraft bereit, durch die über die Aufnahme 66 eine Kraft in das Trägerelement 58 eingeleitet wird, die von dem Halteelement 40 und somit dem Querelement 18 weggerichtet ist. Die in die Aufnahme 66 des Trägerelements 58 eingeleitete Kraft wird über einen Hebel, der durch den Abstand der Aufnahme 66 und der Schwenkachse 50 der ersten Drehlagereinheit 34 gegeben ist, in ein Drehmoment um die Schwenkachse 50 der ersten Drehlagereinheit 34 umgesetzt. Durch das Drehmoment wird das Trägerelement 58 in dem betätigten Zustand des Aktuators 20 um die Schwenkachse 50 der ersten Drehlagereinheit 34 gedreht, insofern keine entsprechende Gegenkraft auf das Trägerelement 58 wirkt, welche der über den Aktuator 20 eingeleiteten Kraft entgegenwirkt und diese aufhebt. In einem unbetätigten Zustand ist der Aktuator 20 verriegelt und hält dadurch das Trägerelement 58 in der entsprechenden Position. Zur Betätigung des Aktuators 20 weist das Beinabstützmodul 24 ein nicht näher dargestelltes Betätigungselement auf. Das Betätigungselement ist dabei als ein Druckknopf ausgebildet. Das als Druckknopf ausgebildete Betätigungselement ist über eine nicht näher dargestellte Betätigungsleitung mit dem Aktuator 20 verbunden. Die Betätigungsleitung gibt eine Betätigungskraft, die auf das Betätigungselement ausgeübt wird, mechanisch an den Aktuator 20 weiter. Die Betätigungsleitung ist dabei als ein Bowdenzug ausgebildet. Ist das Betätigungselement betätigt, ist der Aktuator 20 in seinem betätigten Zustand. Ist das Betätigungselement unbetätigt, ist der Aktuator 20 in seinem unbetätigten Zustand. Grundsätzlich ist es auch denkbar, dass das Betätigungselement und entsprechend auch die Betätigungsleitung anders ausgebildet sind, wie beispielsweise als ein elektrischer Taster und eine entsprechende elektrische Leitung.

Die Linearlagereinheit 38 ist auf dem Trägerelement 58 angeordnet. Die Linearlagereinheit 38 weist ein erstes Linearlagerelement 72 auf. Das erste Linearlagerelement 72 ist als ein Gleitschienenelement ausgebildet. Das erste Linearlagerelement 72 der Linearlagereinheit 38 ist starr mit dem Trägerelement 58 verbunden. Dabei ist das erste Linearlagerelement 72 fest auf dem zweiten flachen Teilbereich 62 des Trägerelements 58 angebracht. Das erste Linearlagerelement 72 ist dabei auf einer dem Sitzboden 12 in der Verstaustellung abgewandten Seite des zweiten flachen Teilbereichs 62 des Trägerelements 58 angeordnet. Das erste Linearlagerelement 72 ist dabei über eine nicht näher dargestellte Schraubenverbindung fest auf dem zweiten flachen Teilbereich 62 des Trägerelements 58 verschraubt. Grundsätzlich sind hier natürlich auch andere, sinnvolle Form- und/oder Kraftschlussverbindungen, wie beispielsweise Nieten, denkbar. Grundsätzlich ist auch eine Stoffschlussverbindung denkbar. Die Linearlagereinheit 38 weist ein zweites Linearlagerelement 74 auf. Das zweite Linearlagerelement 74 ist als ein Gleitschienenelement ausgebildet. Das zweite Linearlagerelement 74 ist korrespondierend zu dem ersten Linearlagerelement 72 der Linearlagereinheit 38 ausgebildet. Die beiden Linearlagerelemente 72, 74 greifen formschlüssig ineinander ein und sind entlang der Verschiebeachse 54 der Linearlagereinheit 38 zueinander verschiebbar. Das zweite Linearlagerelement 74 ist dabei auf einer dem Trägerelement 58 abgewandten Seite des ersten Linearlagerelements 72 angebracht. Das zweite Linearlagerelement 74 läuft in dem ersten Linearlagerelement 72. Das zweite Linearlagerelement 74 weist zu dem ersten Linearlagerelement 72 einen Freiheitsgrad auf. Die Linearlagereinheit 38 weist einen Verfahrweg von 100 mm auf. Das zweite Linearlagerelement 74 ist entlang der Verschiebeachse 54 um 100 mm zu dem ersten Linearlagerelement 72 verschiebbar. Grundsätzlich ist es auch denkbar, dass die Linearlagereinheit 38 als ein anderes, dem Fachmann als sinnvoll erscheinendes Linearlager ausgebildet ist und beispielsweise eine Rolle aufweist, die auf einer korrespondierend ausgebildeten Ablauffläche abläuft. Grundsätzlich ist es auch denkbar, dass ein Linearlagerelement der Linearlagereinheit als ein Zylinder ausgebildet ist, der in wenigstens einer Aufnahme, beispielsweise einer entsprechend ausgeformten Öse, verschiebbar gelagert ist.

Das Beinabstützmodul 24 weist eine Befestigungsplatte 76 auf. Die Befestigungsplatte 76 ist dazu vorgesehen, dass auf ihr das Beinabstützelement 26 angebracht wird. Die Befestigungsplatte 76 ist als eine flache Platte ausgebildet. Die Befestigungsplatte 76 ist über die Linearlagereinheit 38 mit dem Trägerelement 58 gekoppelt. Zur Kopplung mit dem Trägerelement 58 ist die Befestigungsplatte 76 starr mit dem zweiten Linearlagerelement 74 der Linearlagereinheit 38 verbunden. Die Befestigungsplatte 76 ist auf einer dem ersten Linearlagerelement 72 abgewandten Seite des zweiten Linearlagerelements 74 angebracht. Die zweite Drehlagereinheit 36 ist auf der Befestigungsplatte 76 angebracht. Über die zweite Drehlagereinheit 36 ist das Beinabstützelement 26 schwenkbar auf der Befestigungsplatte 76 angebracht. Die zweite Drehlagereinheit 36 weist ein erstes Lagerelement 78 auf. Das erste Lagerelement 78 der zweiten Drehlagereinheit 36 ist als eine Erhebung mit einer Aufnahme ausgebildet. Das erste Lagerelement 78 ist fest mit der Befestigungsplatte 76 verbunden. Dabei ist es auch denkbar, dass das erste Lagerelement 78 einstückig mit der Befestigungsplatte 76 ausgebildet ist. Die zweite Drehlagereinheit 36 weist ein zweites Lagerelement 80 auf. Das zweite Lagerelement 80 der zweiten Drehlagereinheit 36 ist starr mit dem Grundkörper 30 des Beinabstützelements 26 verbunden. Das zweite Lagerelement 80 der zweiten Drehlagereinheit 36 ist an einer Unterseite des Beinabstützelements 26 angeordnet. Das zweite Lagerelement 80 ist korrespondierend zu dem ersten Lagerelement 78 der zweiten Drehlagereinheit 36 ausgebildet. Das zweite Lagerelement 80 ist als eine Erhebung mit einer Aufnahme ausgebildet. Die zweite Drehlagereinheit 36 weist einen Lagerbolzen 82 auf, über den die beiden Lagerelemente 78, 80 der zweiten Drehlagereinheit 36 zueinander verschwenkbar sind. Der Lagerbolzen 82 ist dabei durch die Aufnahmen der beiden Lagerelemente 78, 80 geführt und darin durch entsprechende Sicherungselemente, die hier nicht näher dargestellt sind, axial gesichert.

Das Beinabstützelement 26 ist über die zweite Drehlagereinheit 36 mit der Befestigungsplatte 76 verbunden, die Befestigungsplatte 76 ist über die Linearlagereinheit 38 mit dem Trägerelement 58 und das Trägerelement 58 ist über die erstes Drehlagereinheit 34 mit dem Querelement 18 und damit der Grundstruktur 22 des Fluggastsitzes 10 verbunden. Das Beinabstützelement 26 ist über die zweite Drehlagereinheit 36, die Befestigungsplatte 76, die Linearlagereinheit 38, das Trägerelement 58 und die erste Drehlagereinheit 34 an den Fluggastsitz 10 angebunden. In der als Verstaustellung ausgebildeten ersten Maximalstellung des Beinabstützmoduls 24, die in Figur 1 abgebildet ist, ist das Beinabstützelement 26 unterhalb des Sitzbodens 12 des Fluggastsitzes 10 angeordnet. Dabei schließt das Beinabstützelement 26 in der Verstaustellung den Fluggastsitz 10 unterhalb des Sitzbodens 12 nach vorne hin ab. Das Trägerelement 58 ist in der Verstaustellung des Beinabstützmoduls 24 in eine eingeklappte Stellung geklappt, in der das Trägerelement 58 im Wesentlichen orthogonal zu dem Sitzboden 12 bzw. einem Kabinenboden ausgerichtet ist. Dabei ist der Aktuator 20 in der Verstaustellung des Beinabstützmoduls 24 in einer Minimalstellung. Die Linearlagereinheit 38 ist in der Verstaustellung des Beinabstützmoduls 24 in einer Minimalstellung. In der Minimalstellung ist die über die Linearlagereinheit 38 verschiebbare Befestigungsplatte 76 und damit das daran befestigte Beinabstützelement 26 maximal an das Halteelement 40 und damit an das Querelement 18 des Fluggastsitzes 10 herangefahren. Zur Verstellung des Beinabstützmoduls 24 aus der Verstaustellung heraus wird der Aktuator 20 über das Bedienelement in einen betätigten Zustand überführt, wodurch dieser eine Kraft auf das Trägerelement 58 ausübt. Die Kraft erzeugt ein Drehmoment um die Schwenkachse 50 der ersten Drehlagereinheit 34, wodurch das Trägerelement 58 und damit auch das Beinabstützelement 26 aus der Verstaustellung nach vorne und oben verschwenkt werden, insofern keine größere Gegenkraft an dem Trägerelement 58 anliegt. Bei der Verstellung fährt der Aktuator 20 mit seiner Kolbenstange aus. So lange der Aktuator 20 über das Betätigungselement in einem betätigten Zustand gehalten wird und eine Kraft auf das Trägerelement 58 ausübt, wird das Trägerelement 58 und damit das Beinabstützelement 26 in Richtung der maximal ausgefahrenen Nutzstellung verfahren. Das Trägerelement 58 kann aus der Verstaustellung heraus um ca. 90 Grad verstellt werden, bis das Beinabstützelement 26 mit seiner Abstützfläche 28 im Wesentlichen parallel zu der Sitzfläche 14 des Sitzbodens 12 ausgerichtet ist. In der maximalen Verstellstellung des Trägerelements 58 ist der Aktuator 20 in einer maximal ausgefahrenen Stellung und bildet dadurch einen Anschlag für die Verstellung des Trägerelements 58 aus. Grundsätzlich ist es auch denkbar, dass das Beinabstützmodul 24 einen mechanischen Anschlag aufweist, an dem das Trägerelement 58 in der maximalen Verstellstellung des Trägerelements 58 anschlägt. Ist das Trägerelement 58 aus seiner Verstaustellung herausgeschwenkt, kann ein Abstand des Beinabstützelements 26 zu dem Sitzboden 12 über die Linearlagereinheit 38 eingestellt werden. Über die zweite Drehlagereinheit 36 kann eine Ausrichtung des Beinabstützelements 26 zu dem Sitzboden 12 erfolgen und das Beinabstützelement 26 zu dem Sitzboden 12 verkippt werden. Dadurch kann das Beinabstützelement 26 für unterschiedliche Passagiere nach deren Wünschen optimal eingestellt werden und so kann ein Komfort erhöht werden. Je nach Beinlänge eines Passagiers sowie gewünschten Positionen des Beinabstützelements 26 können die Linearlagereinheit 38 und die zweite Drehlagereinheit 36 entsprechend eingestellt werden.

Das Beinabstützmodul 24 umfasst einen Rückstellmechanismus 86. Der Rückstellmechanismus 86 ist für eine selbsttätige Rückstellbewegung des Beinabstützelements 26 aus einer ausgefahrenen Stellung vorgesehen. Ist das Beinabstützelement 26 aus der Verstaustellung herausgefahren und die Linearlagereinheit 38 aus ihrer Minimalstellung herausgefahren, ist also das Beinabstützelement 26 von dem kleinstmöglichen Abstand zu dem Querelement 18 auf einen größeren Abstand zu dem Querelement 18 verstellt, ist der Rückstellmechanismus 86 dazu vorgesehen, bei einer Rückstellung des Trägerelements 58 in die Verstaustellung die Linearlagereinheit 38 in ihre Minimalstellung zurückzuführen.

Der Rückstellmechanismus 86 umfasst ein erstes Hebelelement 88. Das erste Hebelelement 88 ist schwenkbar an dem Halteelement 40 angebracht. Dazu weist das Halteelement 40 eine Aufnahme 90 auf, die das Hebelelement 88 schwenkbar an das Halteelement 40 anbindet. Die Aufnahme 90 bildet eine Lagerachse aus, um die das Hebelelement 88 schwenkbar ist. Die Lagerachse der Aufnahme 90 ist zu der Schwenkachse 50 der ersten Drehlagereinheit 34 versetzt. Ein Lager, über das das Hebelelement 88 zu dem Halteelement 40 gelagert ist, ist als ein Taumellager ausgebildet. So wird das Hebelelement 88 bei einer Rotation um die Lagerachse des Lagers in Richtung der Lagerachse verkippt. Die Aufnahme 90 ist einstückig mit dem Grundkörper 48 des Halteelements 40 ausgebildet. Das Hebelelement 88 ist als ein stabförmiges Element ausgebildet. Das Hebelelement 88 erstreckt sich dabei von dem Halteelement 40 aus im Wesentlichen in dieselbe Richtung wie das Trägerelement 58. Mit einem ersten Ende ist das Hebelelement 88 mit der Aufnahme 90 des Halteelements 40 verbunden. Dabei sind die Aufnahme 90 und damit das Hebelelement 88 in einem montierten Zustand auf einer ersten Seite des Trägerelements 58 angeordnet.

Der Rückstellmechanismus 86 umfasst ein Umlenkelement 92. Das Umlenkelement 92 ist als ein flacher Stab ausgebildet. Mit einem ersten Ende ist das Umlenkelement 92 schwenkbar mit dem zweiten Ende des Hebelelements 88 gekoppelt. Dabei sind das Umlenkelement 92 und das Hebelelement 88 über eine Koppelstelle 94 schwenkbar miteinander verbunden. Die Koppelstelle 94 bildet dabei eine Ausgleichslagerung aus, über die Winkelunterschiede zwischen dem Hebelelement 88 und dem Umlenkelement 92 ausgeglichen werden können. Das Umlenkelement 92 bildet eine Umlenkstelle 96 aus. An der Umlenkstelle 96 weist das Umlenkelement 92 eine Aufnahme auf. Korrespondierend zu der Aufnahme des Umlenkelements 92 bildet das Trägerelement 58 eine korrespondierende Aufnahme aus. Über einen nicht näher dargestellten Lagerbolzen ist das Umlenkelement 92 an der Umlenkstelle 96 zu dem Trägerelement 58 verdrehbar. Die Umlenkstelle 96 ist dabei zwischen dem ersten Ende des Umlenkelements 92, an dem dieses mit dem Hebelelement 88 verbunden ist, und einem zweiten Ende des Umlenkelements 92 angeordnet. Dabei ist ein Abstand zwischen dem ersten Ende des Umlenkelements 92 und der Umlenkstelle 96 kleiner als ein Abstand zwischen dem zweiten Ende des Umlenkelements 92 und der Umlenkstelle 96. Das Umlenkelement 92 überspannt das Trägerelement 58. Das erste Ende des Umlenkelements 92 ist auf der ersten Seite des Trägerelements 58 angeordnet. Das zweite Ende des Umlenkelements 92 ist auf einer zweiten Seite des Trägerelements 58 angeordnet.

Der Rückstellmechanismus 86 umfasst eine Führungsplatte 98. Die Führungsplatte 98 ist als eine längliche flache Platte ausgebildet. Mit einem ersten Ende ist die Führungsplatte 98 über eine Koppelstelle 100 schwenkbar mit dem zweiten Ende des Umlenkelements 92 gekoppelt. Dazu weisen das zweite Ende des Umlenkelements 92 sowie das erste Ende der Führungsplatte 98 jeweils eine Aufnahme auf, die zusammen mit einem nicht näher dargestellten Lagerelement die Koppelstelle 100 ausbilden. Die Koppelstelle 100 bildet dabei eine Ausgleichslagerung aus, über die Winkelunterschiede zwischen dem Umlenkelement 92 und der Führungsplatte 98 ausgeglichen werden können. Die Führungsplatte 98 umfasst ein Führungselement 102. Das Führungselement 102 ist als eine Nut ausgebildet. Dabei ist das Führungselement 102 als eine Durchgangsnut ausgebildet, die von einer oberen Seite der Führungsplatte 98 bis an eine untere Seite der Führungsplatte 98 reicht. Das Führungselement 102 bildet eine Kurvenbahn aus. Dabei liegt ein Mittelpunkt der Kurvenbahn, die das Führungselement 102 ausbildet, auf einer dem Trägerelement 58 abgewandten Seite. Das Führungselement 102 ist zur Kopplung der Führungsplatte 98 mit der Befestigungsplatte 76 des Beinabstützmoduls 24 vorgesehen. Zur Kopplung mit dem Führungselement 102 weist die Befestigungsplatte 76 einen Anbindungsbereich 104 auf. Der Anbindungsbereich 104 erstreckt sich von der zweiten Drehlagereinheit 36 bis in einen Bereich, der über die zweite Seite des Trägerelements 58 hinausragt. In einem äußeren Endbereich weist der Anbindungsbereich 104 ein Aufnahmeloch 106 auf. Das Aufnahmeloch 106 ist zur Kopplung des Anbindungsbereichs 104 und damit der Befestigungsplatte 76 mit der Führungsplatte 98 vorgesehen. Der Rückstellmechanismus 86 umfasst ein Verbindungselement 108, das in montiertem Zustand die Befestigungsplatte 76 und die Führungsplatte 98 über das Aufnahmeloch 106 und das Führungselement 102 miteinander verbindet. Das Verbindungselement 108 ist als ein Bolzen ausgebildet. Das als Bolzen ausgebildete Verbindungselement 108 durchgreift sowohl das Aufnahmeloch 106 des Anbindungsbereichs 104 der Befestigungsplatte 76 als auch das Führungselement 102 der Führungsplatte 98. Das Verbindungselement 108 ist axial in dem Aufnahmeloch 106 und dem Führungselement 102 fixiert. Das Verbindungselement 108 ist dabei durch nicht näher dargestellte Sicherungselemente verliersicher in dem Aufnahmeloch 106 und dem Führungselement 102 gehalten. Das Verbindungselement 108 ist in dem als Nut ausgebildeten Führungselement 102 verschiebbar angeordnet. Das Verbindungselement 108 weist in dem Führungselement 102 eine erste Endposition auf, in der das Verbindungselement 108 an einem ersten Ende des Führungselements 102, das dem ersten Ende der Führungsplatte 98 zugewandt ist, anschlägt. Das Verbindungselement 108 weist in dem Führungselement 102 eine zweite Endposition auf, in der das Verbindungselement 108 an einem zweiten Ende des Führungselements 102, das dem zweiten Ende der Führungsplatte 98 zugewandt ist, anschlägt.

Im Folgenden soll kurz die Funktionsweise des Beinabstützmoduls 24 und insbesondere die Rückstellung des Beinabstützelements 26 aus einer ausgefahrenen Nutzstellung mittels des Rückstellmechanismus 86 erläutert werden. Figur 1, Figur 4 und Figur 6 zeigen in verschiedenen Ansichten die als Verstaustellung ausgebildete Maximalstellung des Beinabstützmoduls 24, in der das Beinabstützelement 26 unter dem Sitzboden 12 angeordnet ist und in etwa 90 Grad zu dem Kabinenboden und der Sitzfläche 14 ausgerichtet ist. Das Hebelelement 88 des Rückstellmechanismus 86 erstreckt sich in dieser Stellung bis unter die Umlenkstelle 96, über die das Umlenkelement 92 schwenkbar an dem Trägerelement 58 gelagert ist. Durch die Kopplung des Hebelelements 88 mit dem Umlenkelement 92 über die Koppelstelle 94 ist das Umlenkelement 92 mit seinem ersten Ende, von der Schwenkachse 50 der ersten Drehlagereinheit 34 gesehen, über die das Trägerelement 58 an das Querelement 18 angebunden ist, weiter entfernt als die Umlenkstelle 96, wodurch das Umlenkelement 92 mit seinem zweiten Ende in Richtung der Schwenkachse 50 der ersten Drehlagereinheit 34 gerichtet ist. In dieser Stellung ist das zweite Ende des Umlenkelements 92 näher an der Schwenkachse 50 der ersten Drehlagereinheit 34 angeordnet als das erste Ende des Umlenkelements 92. Die über die Koppelstelle 100 mit der zweiten Seite des Umlenkelements 92 gekoppelte Führungsplatte 98 ist in dieser Stellung möglichst weit in Richtung der Schwenkachse 50 verschoben und das Verbindungselement 108 weist in dem Führungselement 102 seine zweite Endposition auf, in der das Verbindungselement 108 an einem zweiten Ende des Führungselements 102, das dem zweiten Ende der Führungsplatte 98 zugewandt ist, anschlägt. Durch den Anschlag des Verbindungselements 108 an dem zweiten Ende des Führungselements 102, das dem zweiten Ende der Führungsplatte 98 zugewandt ist, ist die Linearlagereinheit 38 gesperrt, wobei die beiden Linearlagerelemente 72, 74 nicht zueinander verschoben werden können. Dadurch wird eine Axialverschiebung des Beinabstützelements 26 entlang der Verschiebeachse 54 der Linearlagereinheit 38 in dieser Stellung verhindert.

Wird das Trägerelement 58 aus der Verstaustellung herausgeschwenkt, verschiebt sich die Koppelstelle 94, über die das Hebelelement 88 mit dem Umlenkelement 92 gekoppelt ist, dadurch, dass die Schwenkachse 50 der ersten Drehlagereinheit 34 und die Lagerachse der Aufnahme 90, mittels der das Hebelelement 88 gelagert ist, versetzt zueinander angeordnet sind, zu der Umlenkstelle 96. Dabei verschiebt sich die Koppelstelle 94 relativ zu der Umlenkstelle 96 in Richtung der Schwenkachse 50. Durch diese Verschiebung, bei der sich die Koppelstelle 94, also auch das erste Ende des Umlenkelements 92, in Richtung der Schwenkachse 50 bewegt, wird das Umlenkelement 92 um die Umlenkstelle 96 rotiert, wodurch sich das zweite Ende des Umlenkelements 92 von der Schwenkachse 50 wegbewegt. Dabei wird das Umlenkelement 92 proportional zu der Verschwenkung des Trägerelements 58 um die Schwenkachse 50 der ersten Drehlagereinheit 34 um die Umlenkstelle 96 rotiert. Durch die Kopplung des Umlenkelements 92 über die Koppelstelle 100, die an dem zweiten Ende des Umlenkelements 92 angeordnet ist, mit der Führungsplatte 98, wird die Führungsplatte 98 bei dieser Rotation des Umlenkelements 92 von der Schwenkachse 50 wegbewegt. In den Figuren 2, 3, 5 und 7 ist eine entsprechende Stellung gezeigt, in der das Trägerelement 58 aus der Ruhestellung herausgeschwenkt ist und sich die Führungsplatte 98 durch Verstellung des Rückstellmechanismus 86 von der Schwenkachse 50 weg und relativ zu dem Trägerelement 58 verschoben hat. Durch die Verschiebung der Führungsplatte 98 relativ zu dem Trägerelement 58 verschiebt sich das Verbindungselement 108 in dem Führungselement 102 aus der zweiten Endposition heraus. Durch die Verschiebung des Verbindungselements 108 in dem Führungselement 102 der Führungsplatte 98 aus der zweiten Endposition heraus wird die Linearlagereinheit 38 freigegeben und das Beinabstützelement 26 kann über die Linearlagereinheit 38 entlang der Verschiebeachse 54 verschoben werden. Dabei wird ein freigegebener möglicher Verfahrweg des Beinabstützelements 26 über die Linearlagereinheit 38 größer, je weiter das Verbindungselement 108 von der zweiten Endposition herausbewegt wird. Je weiter das Trägerelement 58 aus der Verstaustellung herausgeschwenkt wird, desto weiter wird die Führungsplatte 98 zu dem Trägerelement 58, und damit das Verbindungselement 108 in dem Führungselement 102, verschoben. Dadurch kann das Beinabstützelement 26, je weiter das Trägerelement 58 aus der Verstaustellung herausgeschwenkt ist, desto weiter über die Linearlagereinheit 38 entlang der Verschiebeachse 54 verschoben werden. Ist das Trägerelement 58 bis auf die zweite Maximalstellung des Beinabstützmoduls 24 (siehe Figur 2) verschwenkt und das Beinabstützelement 26 mittels der Linearlagereinheit 38 nicht aus seiner Minimalstellung herausbewegt, ist das Verbindungselement 108 in seiner ersten Endposition und schlägt an dem ersten Ende des Führungselements 102, das dem ersten Ende der Führungsplatte 98 zugewandt ist, an. Dadurch ist in der zweiten Maximalstellung des Beinabstützmoduls 24 der gesamte Verfahrweg, den die Linearlagereinheit 38 entlang der Verschiebeachse 54 bereitstellt, freigegeben. Ist das Trägerelement 58 aus der Verstaustellung herausgeschwenkt, kann der Passagier das Beinabstützelement 26, je nachdem, wie weit das Trägerelement 58 verschwenkt ist und damit ein Verfahrweg durch den Rückstellmechanismus 86 freigegeben ist, entlang der Verschiebeachse 54 über die Linearlagereinheit 38 verschieben und über die zweite Drehlagereinheit 36 in einer Neigung zu dem Sitzboden 12 einstellen. Dadurch kann der Passagier das Beinabstützelement 26 des Beinabstützmoduls 24 einfach auf eine für ihn optimale Position einstellen.

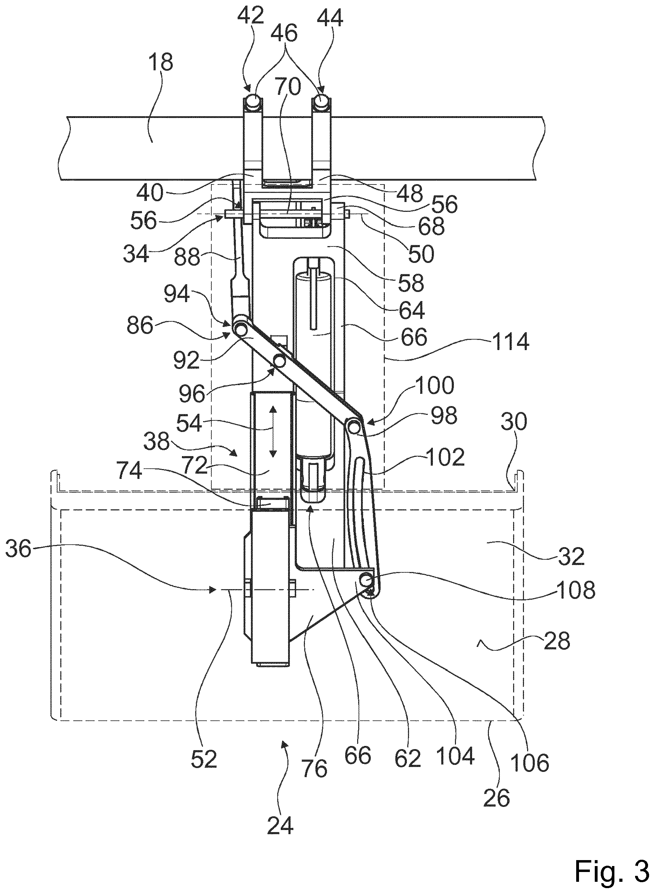

Aus einer Stellung, in der das Trägerelement 58 aus der Verstaustellung herausgeschwenkt und das Beinabstützelement 26 über die Linearlagereinheit 38 entlang der Verschiebeachse 54 verschoben ist, ist das Verbindungselement 108 entsprechend der Verstellung der Linearlagereinheit 38 zwischen den beiden Endpositionen in dem Führungselement 102 angeordnet (beispielsweise Figur 3). Wird nun das Trägerelement 58 aus dieser Stellung wieder in Richtung der Verstaustellung geschwenkt, so verschieben sich das Hebelelement 88 und das Trägerelement 58, entgegengesetzt zu der Verschiebung beim Herausschwenken aus der Verstausstellung, wieder zueinander. Durch diese Verschiebung des Hebelelements 88 und des Trägerelements 58 zueinander wird das Umlenkelement 92 wieder in Richtung seiner Stellung in der Verstaustellung bewegt und sein zweites Ende, an dem das Umlenkelement 92 mit der Führungsplatte 98 gekoppelt ist, verschiebt sich wieder in Richtung der Schwenkachse 50. Durch diese Bewegung schlägt das Verbindungselement 108, je nachdem wie weit die Linearlagereinheit 38 verstellt war, an einem gewissen Punkt an dem zweiten Ende des Führungselements 102 an und wird durch die weitere Bewegung der Führungsplatte 98 in Richtung der Schwenkachse 50 mitgenommen. So wird die Linearlagereinheit 38, und damit das Beinabstützelement 26, bei einer Verschenkung des Trägerelements 58 zurück in die Verstaustellung über den Rückstellmechanismus 86 und insbesondere über die Kopplung der Befestigungsplatte 76 und der Führungsplatte 98 mittels des Verbindungselements 108 zurück in die Minimalstellung verschoben. Dadurch kann verhindert werden, dass das Beinabstützelement 26 oder die Befestigungsplatte 76 bei einem Zurückschwenken in die Verstaustellung in einem ausgefahrenen Zustand bleiben und dadurch auf dem Kabinenboden auftreffen kann.

Das Beinabstützmodul 24 weist eine Abdeckeinheit 110 auf. Die Abdeckeinheit 110 ist dazu vorgesehen, einen Bereich zwischen dem Sitzboden 12 und dem Beinabstützelement 26 zu überspannen. Die Abdeckeinheit 110 umfasst ein Textil- oder Lederelement 112. Das Textil- oder Lederelement 112 ist zwischen dem Beinabstützelement 26 und dem Sitzboden 12 angeordnet. Dabei ist das Textil- oder Lederelement 112 mit einem ersten Ende an einem vorderen Ende des Sitzbodens 12 und mit einem zweiten Ende an einer dem Sitzboden 12 zugewandten Seite des Beinabstützelements 26 fest angebunden. Das Textil- oder Lederelement 112 ist dabei elastisch ausgebildet, sodass es in den verschiedenen Abständen, in denen das Beinabstützelement 26 zu dem Sitzboden 12 angeordnet sein kann, den Bereich zwischen dem Beinabstützelement 26 und dem Sitzboden 12 sicher überdecken kann. Grundsätzlich ist es auch denkbar, dass die Abdeckeinheit 110 ein anderes Abdeckelement aufweist, das beispielsweise durch eine entsprechende Faltung die unterschiedlichen Abstände zwischen dem Beinabstützelement 26 und dem Sitzboden 12 ausgleichen kann. Dabei ist die Abdeckeinheit 110 mit dem Textil- oder Lederelement 112 aus Gründen der Übersichtlichkeit lediglich in der Figur 1 schematisch dargestellt.

Die Abdeckeinheit 110 weist weiter eine Abdeckplatte 114 auf. Die Abdeckplatte 114 ist in Figur 3 schematisch dargestellt. Die Abdeckplatte 114 ist dazu vorgesehen, bewegliche Teile des Beinabstützmoduls 24, wie insbesondere die Linearlagereinheit 38 und den Rückstellmechanismus 86 abzudecken, sodass ein Passagier sich an den beweglichen Teilen nicht beispielsweise die Finger einklemmen kann. Dabei ist die Abdeckplatte 114 vorzugsweise als eine Profilplatte ausgebildet, sodass die Abdeckplatte 114 die beweglichen Teile des Beinabstützmoduls 24 möglichst von vielen Seiten umschließt. Die Abdeckplatte 114 ist dabei an dem Trägerelement 58 befestigt. Grundsätzlich ist es auch denkbar, dass die Abdeckplatte 114 beispielsweise an dem Halteelement 40 angebunden ist. Grundsätzlich ist es ebenfalls denkbar, dass die Abdeckplatte 114 als Lagerelement ausgebildet ist, das für ein oder mehrere Elemente des Rückstellmechanismus 86 und/oder des Beinabstützmoduls 24 einen Befestigungspunkt ausbildet.

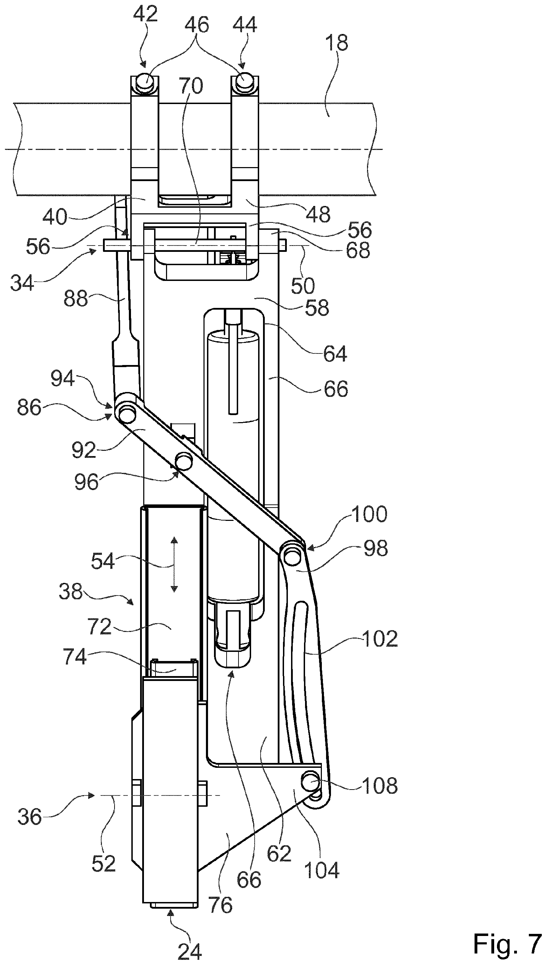

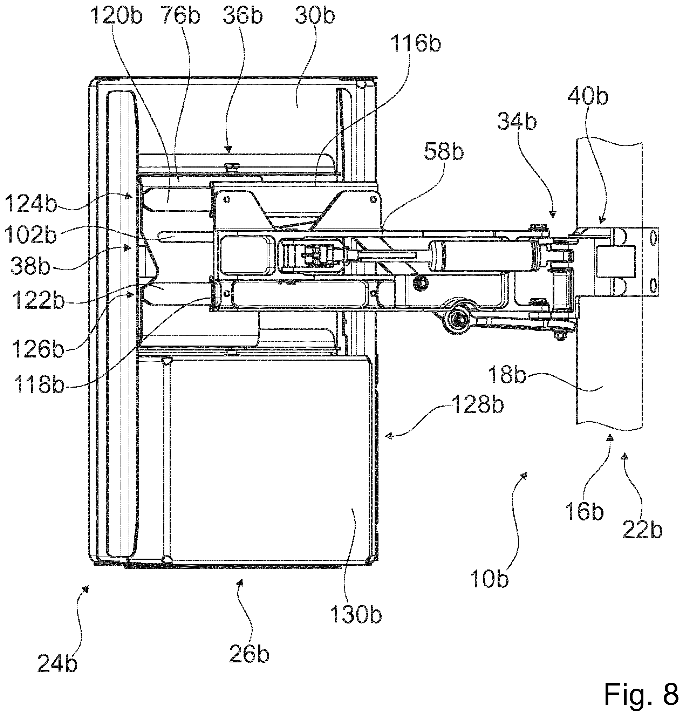

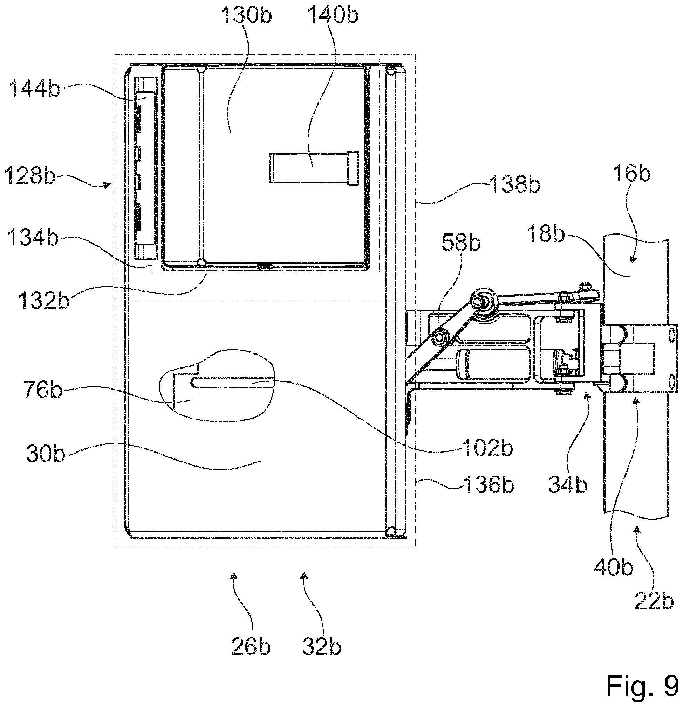

In Fig. 8 und 9 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 7, verwiesen werden kann. Zur Unterscheidung der Ausführungsbeispiele ist in dem zweiten Ausführungsbeispiel der Fig. 7 bis 8 der Buchstabe b den Bezugszeichen nachgestellt.

Die Figuren 7 und 8 zeigen ein zweites Ausführungsbeispiel einer erfindungsgemäßen Fluggastsitzvorrichtung. Die Fluggastsitzvorrichtung umfasst einen Fluggastsitz 10b. Der Fluggastsitz 10b umfasst einen nicht näher dargestellten Sitzboden, der eine Sitzfläche für einen Passagier bereitstellt. Der Fluggastsitz 10b ist in einer Flugzeugkabine aufgeständert. Dazu weist der Fluggastsitz 10b eine Aufständereinheit 16b auf. Mittels der Aufständereinheit 16b ist der Fluggastsitz 10b fest auf einem Kabinenboden der Flugzeugkabine angeordnet. Der Fluggastsitz 10b weist ein erstes vorderes Querelement 18b und ein zweites hinteres Querelement auf. Grundsätzlich ist es auch denkbar, dass das Querelement 18b als ein einzelnes Querelement des Fluggastsitzes 10b ausgebildet ist. Der Fluggastsitz 10b ist dabei als ein Teil einer nicht näher dargestellten Sitzreihe ausgebildet.

Der Fluggastsitz 10b weist ein Beinabstützmodul 24b auf. Das Beinabstützmodul 24b ist dazu vorgesehen, dass ein auf dem Fluggastsitz 10b sitzender Passagier seine Beine und/oder seine Füße darauf ablegen kann. Das Beinabstützmodul 24b ist direkt an einer Grundstruktur des Fluggastsitzes 10b angebunden. Dabei ist das Beinabstützmodul 24b an dem vorderen Querelement 18b der Grundstruktur 22b angebracht. Das Beinabstützmodul 24b umfasst ein Beinabstützelement 26b. Grundsätzlich ist es auch denkbar, dass das Beinabstützmodul 24b mehrere Beinabstützelemente 26b umfasst. Das Beinabstützelement 26b bildet eine Abstützfläche 28b aus, die dazu vorgesehen ist, dass ein auf dem Fluggastsitz 10b sitzender Passagier sein Bein und/oder seinen Fuß darauf ablegen kann. Das Beinabstützelement 26b umfasst einen Grundkörper 30b. Der Grundkörper 30b ist als ein flächiges Element ausgebildet. Der Grundkörper 30b ist dabei beispielsweise aus einem Blech oder einem Faserverbundwerkstoff gebildet.

Das Beinabstützelement 26b ist teilweise beweglich zu dem Sitzboden des Fluggastsitzes 10b ausgebildet. Das Beinabstützelement 26b ist in verschiedenen Stellungen zu dem Sitzboden 12b verschwenk- und verschiebbar. Das Beinabstützelement 26b weist dabei eine erste Maximalstellung und eine zweite Maximalstellung auf. Zwischen den beiden Maximalstellungen ist das Beinabstützelement 26b stufenlos verstellbar. Die erste Maximalstellung ist als eine Verstaustellung ausgebildet. Eine zweite Maximalstellung ist als eine maximal ausgefahrene Nutzstellung ausgebildet.

Zur Verstellung des Beinabstützelements 26b weist das Beinabstützmodul 24b zwei Drehlagereinheiten 34b, 36b und eine Linearlagereinheit 38b auf. Die erste Drehlagereinheit 34b ist dazu vorgesehen, das Beinabstützelement 26b zu dem Querelement 18b zu verschwenken. Die zweite Drehlagereinheit 36b ist beabstandet zu der ersten Drehlagereinheit 34b angeordnet. Die zweite Drehlagereinheit 36b ist dazu vorgesehen, eine Ausrichtung des Beinabstützelements 26b zu dem Sitzboden 12b zu verstellen. Die Linearlagereinheit 38b ist dazu vorgesehen, einen Abstand des Beinabstützelements 26b zu dem Sitzboden 12b zu verstellen. Dazu ist die Linearlagereinheit 38b funktionell zwischen der ersten Drehlagereinheit 34b und der zweiten Drehlagereinheit 36b angeordnet. Über die Linearlagereinheit 38b ist ein Abstand zwischen der ersten Drehlagereinheit 34b und der zweiten Drehlagereinheit 36b variabel.

Das Beinabstützmodul 24b weist ein Trägerelement 58b auf. Das Trägerelement 58b ist dazu vorgesehen, das Beinabstützelement 26b mit dem Querelement 18b zu koppeln. Ein erstes Ende des Trägerelements 58b ist in einem montierten Zustand dem Querelement 18b zugewandt. Ein zweites Ende des Trägerelements 58b ist in montiertem Zustand dem Beinabstützelement 26b zugewandt. Das Trägerelement 58b ist über die erste Drehlagereinheit 34b an das Querelement 18b angebunden. Das Trägerelement 58b ist mit seinem ersten Ende an die Drehlagereinheit 34b angebunden.

Die Linearlagereinheit 38b umfasst zwei erste Linearlagerelemente 116b, 118b. Die beiden ersten Linearlagerelemente 116b, 118b sind fest auf dem Trägerelement 58b angebracht. Die zwei Linearlagerelemente 116b, 118b sind beabstandet zueinander angeordnet. Die Linearlagerelemente 116b, 118b sind parallel zueinander angeordnet. Die Linearlagerelemente 116b, 118b bilden jeweils eine Lagerachse aus. Die Lagerachsen der Linearlagerelemente 116b, 118b sind parallel zueinander. Die Linearlagerelemente 116b, 118b sind parallel zur Verschiebeachse der Linearlagereinheit 38b ausgerichtet. Die Linearlagereinheit 38b weist zwei zweite Linearlagerelemente 120b, 122b auf. Die zweiten Linearlagerelemente 120b, 122b sind korrespondierend zu den ersten Linearlagerelementen 116b, 118b ausgebildet. Dabei ist das eine zweite Linearlagerelement 120b korrespondierend zu dem einen ersten Linearlagerelement 116b ausgebildet. Das eine zweite Linearlagerelement 120b und das eine erste Linearlagerelement 116b greifen formschlüssig ineinander ein und sind entlang der Verschiebeachse der Linearlagereinheit 38b zueinander verschiebbar. Das eine zweite Linearlagerelement 122b ist korrespondierend zu dem einen ersten Linearlagerelement 118b ausgebildet. Das eine zweite Linearlagerelement 122b und das eine erste Linearlagerelement 118b greifen formschlüssig ineinander ein und sind entlang der Verschiebeachse der Linearlagereinheit 38b zueinander verschiebbar. Die Linearlagerelemente 116b, 118b, 120b, 122b sind jeweils als Gleitlagerelemente ausgebildet. Die ineinander eingreifenden ersten Linearlagerelemente 116b, 118b und zweiten Linearlagerelemente 120b, 122b bilden jeweils eine Führung aus. Die zwei Führungen 124b, 126b der Linearlagereinheit 38b sind parallel zueinander angeordnet. Durch die zwei parallelen Führungen 124b, 126b, die die Linearlagereinheit 38b bilden kann eine besonders stabile und sichere Lagerung des Beinablageelements 26b erreicht werden. Insbesondere ein Verkanten der entsprechenden Linearlagerelemente 116b, 118b, 120b, 122b ineinander durch exzentrisch angreifende Kräfte kann vorteilhaft verhindert werden. Das Beinabstützmodul 24b weist eine Befestigungsplatte 76b auf. Die Befestigungsplatte 76b ist dazu vorgesehen, dass auf ihr das Beinabstützelement 26b angebracht wird. Die Befestigungsplatte 76b ist über die Linearlagereinheit 38b mit dem Trägerelement 58b gekoppelt. Zur Kopplung mit dem Trägerelement 58b ist die Befestigungsplatte 76b starr mit den zweiten Linearlagerelementen 120b, 122b der Linearlagereinheit 38b verbunden. Die Befestigungsplatte 76b ist auf einer den ersten Linearlagerelementen 116b, 118b abgewandten Seite der zweiten Linearlagerelemente 120b, 122b angebracht. Die zweite Drehlagereinheit 36b ist auf der Befestigungsplatte 76b angebracht. Über die zweite Drehlagereinheit 36b ist das Beinabstützelement 26b schwenkbar auf der Befestigungsplatte 76b angebracht.

Dabei ist die Linearlagereinheit 38b außermittig an das Beinabstützelement 26b angebunden. Die Befestigungsplatte 76b ist über das das Beinabstützelement 26b ist in einer Querrichtung gesehen näher an einem ersten Ende des Beinabstützelements 26b angebracht als an einem zweiten, gegenüberliegenden Ende. Dadurch ist in einem Bereich des zweiten Endes des Beinabstützelements 26b ein Raum angeordnet, der frei von der Lagerung des Beinabstützmoduls 24b ist, der größer ist als ein Raum in einem Bereich des ersten Endes des Beinabstützelements 26b. Das Beinabstützmodul 24b umfasst ein erstes Halteelement 40b. Das erste Halteelement 40b ist dazu vorgesehen, das Beinabstützmodul 24b an das Querelement 18b anzubinden. Das Halteelement 40b ist dabei außermittig relativ zu dem Sitzboden angeordnet. Dabei ist das Halteelement 40b so angeordnet, dass die außermittige Anbindung der Befestigungsplatte 76b an dem Beinabstützelement 26b ausgeglichen wird und so das Beinabstützmodul 24b in einer Mitte des Sitzbodens 12b angeordnet ist. Das Halteelement 40b umschlingt das Querelement 18b. Das Halteelement 40b ist dabei mittels Befestigungselementen an dem Querelement 18b angebracht. Grundsätzlich ist es auch denkbar, dass das Halteelement 40b zusätzlich oder ausschließlich über eine andere Verbindungsmethode mit dem Querelement verbunden ist, wie beispielsweise mittels einer Verklebung oder einer Vernietung.

Das Beinabstützmodul 24b umfasst ein Rettungswestenbehältnis 128b. Das Rettungswestenbehältnis 128b ist dazu vorgesehen, dass eine Rettungsweste sicher und von einem Passagier in einem Notfall einfach entnehmbar an dem Fluggastsitz aufbewahrt werden kann. Dazu ist das Rettungswestenbehältnis 128b in das Beinabstützelement 26b integriert. Das Rettungswestenbehältnis 128b ist dabei in dem Bereich des zweiten Endes des Beinabstützelements 26b angeordnet. Dieser Bereich ist durch die außermittige Anbindung der Lagerung des Beinabstützmoduls 24b vorteilhaft groß ausgebildet. Das Rettungswestenbehältnis 26b umfasst ein Schalenelement 130b. Das Schalenelement 130b ist aus einem dünnwandigen Material gebildet. Das Schalenelement 130b ist aus einem Metallblech gebildet. Grundsätzlich ist es auch denkbar, dass das Schalenelement 130b aus einem anderen Material, wie beispielsweise einem Faserverbundwerkstoff oder einem Kunststoff gebildet ist. Das Schalenelement 130b weist einen im Wesentlichen geschlossenen Boden und den Boden ringsum begrenzende Seitenwände auf. An einer dem Boden abgewandten Seite weisen die Seitenwände jeweils einen Flansch auf, über die das Schalenelement 130b mit dem Grundkörper 30b des Beinabstützelements 26b gekoppelt werden kann. Der Grundkörper 30b weist eine Öffnung 132b auf, hinter der das Schalenelement 130b angeordnet ist. Ringsum die Öffnung 132b ist das Schalenelement 130b mit dem Grundkörper 30b verbunden. Dabei ist das Schalenelement 130b über geeignete Verbindungselemente, wie beispielsweise Nieten, mit dem Grundkörper 30b verbunden. Grundsätzlich ist es auch denkbar, dass das Schalenelement 130b mit dem Grundkörper 30b verklebt oder einstückig mit diesem ausgebildet ist.

Das Rettungswestenbehältnis 130b weist eine Verschlussklappe 134b auf. Über die Verschlussklappe 134b ist der Bereich, in dem die Rettungsweste innerhalb des Rettungswestenbehältnisses 130b angeordnet ist, nach außen hin verschließbar. Die Verschlussklappe 134b ist als eine schwenkbare Klappe ausgebildet. Grundsätzlich ist es auch denkbar, dass die Verschlussklappe 134b auf eine andere Weise gelagert ist, beispielsweise linearverschiebbar oder lediglich komplett abnehmbar an den Grundkörper 30b angebracht ist. Die Verschlussklappe 134b ist über ein Scharnier 144b verschwenkbar mit dem Grundkörper 30b verbunden. Das Scharnier 144b mittels dem die Verschlussklappe 134b an dem Grundköper 30b gelagert ist, ist dabei an einem dem Sitzboden abgewandten Ende des Grundköpers angeordnet. Die Verschlussklappe 134b des Rettungswestenbehältnis 130b weist ein Griffelement 140b auf, durch das die Verschlussklappe 134b geöffnet werden kann. Das Griffelement 140b ist als eine Lasche ausgebildet, die fest mit der Verschlussklappe 134b verbunden ist. Über das Griffelement 140b lässt sich das Rettungswestenbehältnis 130b öffnen und die Rettungsweste kann entnommen werden. Grundsätzlich ist es auch denkbar, dass das Griffelement 140b direkt mit der Rettungsweste verbunden ist und so die Rettungsweste direkt über das Griffelement 140b ergriffen werden kann. Das Rettungswestenbehältnis weist weiter ein Sicherungselement auf. Das Sicherungselement ist als ein Siegel ausgebildet, das zerstört wird, wenn die Verschlussklappe 134b des Rettungswestenbehältnis 130b geöffnet wird.

Das Beinabstützelement 26b umfasst ein Polsterelement 32b. Das Polsterelement 32b ist mit dem Grundkörper verbunden. Das Polsterelement 32b bildet die Abstützfläche 28b des Beinabstützelements 26b aus. Das Polsterelement 32b ist dabei zweiteilig ausgebildet. Das Polsterelement 32b ist von zwei Polstern 136b, 138b gebildet. Das erste Polster 136b ist fest mit dem Grundkörper 30b des Beinabstützelements 26b verbunden und überdeckt den Bereich des Beinabstützelements 26b, in dem das Rettungswestenbehältnis 130b nicht angeordnet ist. Das zweite Polster 138b ist in dem Bereich des Rettungswestenbehältnisses 130b angeordnet. Dabei sind die Polster 136b, 138b miteinander verbunden. Dabei sind die Polster 136b, 138b in ihrer Quererstreckung gleich groß. Die Polster sind in Querrichtung gesehen dadurch mittig miteinander verbunden. Die Polster 136b 138b lassen sich dabei über eine Verbindungsstelle zueinander bewegen. Grundsätzlich ist es auch denkbar, dass die beiden Polster 136b, 138b, die das Polsterelement 32b ausbilden separat ausgebildet sind. Dabei wäre denkbar, dass das eine Polster nur mit dem Grundkörper 30b und das andere Polster 138b lediglich mit der Verschlussklappe 134b verbunden ist. Die Polster 136b, 138b sind dabei über Flausch und Hakenbänder mit dem Grundkörper 30b und der Verschlussklappe 134b verbunden.

Eine weitere Ausgestaltung des Beinablagemoduls 24b entspricht dem des ersten Ausführungsbeispiels. Insbesondere eine Funktion und generelle Funktionswese eines Rückstellmechanismus 86b entspricht der Beschreibung des ersten Ausführungsbeispiels. Wie auch in dem ersten Ausführungsbeispiel weist das Beinabstützmodul 24b einen Rückstellmechanismus 86b auf, der hier nicht näher dargestellt ist. Der Rückstellmechanismus 86b ist für eine selbsttätige Rückstellbewegung des Beinabstützelements 26b aus einer ausgefahrenen Stellung vorgesehen und von der Funktion her im Wesentlichen identisch wie der aus dem ersten Ausführungsbeispiel. Der Rückstellmechanismus 86b umfasst ebenfalls ein Führungselement 102b. Im Unterschied zu dem ersten Ausführungsbeispiel ist das Führungselement nicht in eine separate Führungsplatte eingebracht, sondern direkt in eine Befestigungsplatte 76 des Beinabstützmoduls. Im Unterschied zu dem ersten Ausführungsbeispiel ist das Führungselement 102b gerade ausgebildet. Das Führungselement 102b ist als eine gerade Nut ausgebildet. Im Unterschied zu dem ersten Ausführungsbeispiel weist das Führungselement 102b keine Krümmung auf.

### Bezugszeichen

- 10: Fluggastsitz
- 12: Sitzboden
- 14: Sitzfläche
- 16: Aufständereinheit
- 18: Querelement
- 20: Aktuator
- 22: Grundstruktur
- 24: Beinabstützmodul
- 26: Beinabstützelement
- 28: Abstützfläche
- 30: Grundkörper
- 32: Polsterelement
- 34: Drehlagereinheit
- 36: Drehlagereinheit
- 38: Linearlagereinheit
- 40: Halteelement
- 42: Haltebereich
- 44: Haltebereich
- 46: Befestigungselement
- 48: Grundkörper
- 50: Schwenkachse
- 52: Schwenkachse
- 54: Verschiebeachse
- 56: erstes Lagerelement
- 58: Trägerelement
- 60: erster flacher Teilbereich
- 62: zweiter flacher Teilbereich
- 64: Durchgangsausnehmung
- 66: Aufnahme
- 68: zweites Lagerelement
- 70: Lagerbolzen
- 72: Linearlagerelement
- 74: Linearlagerelement
- 76: Befestigungsplatte
- 78: Lagerelement
- 80: Lagerelement
- 82: Lagerbolzen
- 84: Lagerstelle
- 86: Rückstellmechanismus
- 88: Hebelelement
- 90: Aufnahme
- 92: Umlenkelement
- 94: Koppelstelle
- 96: Umlenkstelle
- 98: Führungsplatte
- 100: Koppelstelle
- 102: Führungselement
- 104: Anbindungsbereich
- 106: Aufnahmeloch
- 108: Verbindungselement
- 110: Abdeckeinheit
- 112: Textil- oder Lederelement
- 114: Abdeckplatte
- 116: Linearlagerelement
- 118: Linearlagerelement
- 120: Linearlagerelement
- 122: Linearlagerelement
- 124: Führung
- 126: Führung
- 128: Rettungswestenbehältnis
- 130: Rettungswestenbehältnisses
- 132: Öffnung
- 134: Verschlussklappe
- 136: Polster
- 138: Polster
- 140: Griffelement
- 144: Scharnier

## Patentansprüche

1. Fluggastsitzvorrichtung mit einem Fluggastsitz (10; 10b), der wenigstens einen Sitzboden (12) und wenigstens ein Beinabstützmodul (24; 24b) aufweist, das wenigstens ein Beinabstützelement (26; 26b) umfasst, das zu dem Sitzboden (12) wenigstens teilweise beweglich ausgebildet ist, wobei der Fluggastsitz (10; 10b) ein Querelement (18; 18b) aufweist, an dem das Beinabstützmodul (24; 24b) angebunden ist, wobei das Beinabstützmodul (24; 24b) wenigstens zwei Drehlagereinheiten (34, 36; 34b, 36b) und eine Linearlagereinheit (38; 38b) umfasst, mittels denen das Beinabstützelement (26: 26b) beweglich zu dem Sitzboden (12) gelagert ist, wobei die erste Drehlagereinheit (34; 34b) dazu vorgesehen ist, das Beinabstützelement (26; 26b) zu dem Querelement (18a) zu verschwenken und wobei mittels der Linearlagereinheit (38; 38b) ein Abstand zwischen der ersten Drehlagereinheit (34; 34b) und der zweiten Drehlagereinheit (36; 36b) variabel ist **dadurch gekennzeichnet, dass** die zweite Drehlagereinheit (36, 36b) dazu vorgesehen ist, eine Ausrichtung des Beinabstützelements (26, 26b) zu dem Sitzboden (12) zu verstellen.

2. Fluggastsitzvorrichtung nach Anspruch 1, **dadurch gekennzeichnet, dass** das Beinabstützmodul (24; 24b) direkt an dem Fluggastsitz (10; 10b) angebracht ist.

3. Fluggastsitzvorrichtung nach Anspruch 1 oder 2, **dadurch gekennzeichnet, dass** der Fluggastsitz (10; 10b) wenigstens eine Grundstruktur (22; 22b) aufweist, an der das Beinabstützmodul (24; 24b) angebracht ist.

4. Fluggastsitzvorrichtung nach einem der vorhergehenden Ansprüche, **dadurch gekennzeichnet, dass** das Beinabstützmodul (24; 24b) eine Abdeckeinheit (110) aufweist, die in wenigstens einem Betriebszustand einen Bereich zwischen dem Sitzboden (12) und dem Beinabstützelement (26) abdeckt.

5. Fluggastsitzvorrichtung nach Anspruch 4, **dadurch gekennzeichnet, dass** die Abdeckeinheit (110) wenigstens ein Textil- oder Lederelement (112) umfasst, das in dem wenigstens einen Betriebszustand den Bereich zwischen dem Sitzboden (12) und dem Beinabstützelement (26) abdeckt.

6. Fluggastsitzvorrichtung nach einem der vorhergehenden Ansprüche, **dadurch gekennzeichnet, dass** das Beinabstützmodul (24) wenigstens einen Rückstellmechanismus (86) aufweist, der für eine selbsttätige Rückstellbewegung des Beinabstützelements (26) aus einer ausgefahrenen Stellung vorgesehen ist.

7. Fluggastsitzvorrichtung nach Anspruch 6, **dadurch gekennzeichnet, dass** der Rückstellmechanismus (86) dazu vorgesehen ist, eine Verstellung der Linearlagereinheit (38) zurückzustellen.

8. Fluggastsitzvorrichtung nach einem der vorhergehenden Ansprüche, **dadurch gekennzeichnet, dass** das Beinabstützmodul (24) lediglich einen Aktuator (20) aufweist, der für eine Verstellung des Beinabstützelements (26) vorgesehen ist.

9. Fluggastsitzvorrichtung nach einem der vorhergehenden Ansprüche, **dadurch gekennzeichnet, dass** das Beinabstützmodul (24) mittig unter dem Sitzboden (12) angebunden ist.

10. Fluggastsitzvorrichtung zumindest nach Anspruch 6, **dadurch gekennzeichnet, dass** der Rückstellmechanismus (86) zumindest in einer Stellung dazu vorgesehen ist, die Linearlagereinheit (38) zu sperren.

11. Fluggastsitzvorrichtung nach einem der vorhergehenden Ansprüche, **dadurch gekennzeichnet, dass** das Beinabstützmodul (24b) zumindest ein Rettungswestenbehältnis (128b) umfasst, das zumindest teilweise in das Beinabstützmodul (24b) integriert ist.

12. Fluggastsitzvorrichtung nach einem der vorhergehenden Ansprüche, **dadurch gekennzeichnet, dass** das Beinabstützelement (26b) im Bezug auf den Sitzboden (12) außermittig an das Querelement (18b) angebunden ist.

13. Fluggastsitzvorrichtung nach einem der vorhergehenden Ansprüche, **dadurch gekennzeichnet, dass** die Linearlagereinheit (38b) zumindest zwei parallel verlaufende Führungen (124b, 126b) aufweist.

## Claims

1. Flight passenger seating device with a flight passenger seat (10; 10b) which has at least one seat bottom (12) and at least one leg support module (24; 24b) comprising at least one leg support element (26; 26b) that is embodied at least partly movably with respect to the seat bottom (12), wherein the flight passenger seat (10; 10b) comprises a transverse element (18; 18b), which the leg support module (24; 24b) is connected to, wherein the leg support module (24; 24b) comprises at least two pivot bearing units (34, 36; 34b, 36b) and a linear bearing unit (38; 38b), by means of which the leg support element (26; 26b) is supported movably with respect to the seat bottom (12), wherein the first pivot bearing unit (34; 34b) is configured for pivoting the leg support element (26; 26b) with respect to the transverse element (18a) and wherein a distance between the first pivot bearing unit (34; 34b) and the second pivot bearing unit (36; 36b) is variable via the linear bearing unit (38; 38b),
**characterised in that** the second pivot bearing unit (36; 36b) is configured for adjusting an orientation of the leg support element (26; 26b) with respect to the seat bottom (12).

2. Flight passenger seating device according to claim 1,
**characterised in that** the leg support module (24; 24b) is mounted to the flight passenger seat (10; 10b) directly.

3. Flight passenger seating device according to claim 1 or 2,
**characterised in that** the flight passenger seat (10; 10b) comprises at least a base structure (22; 22b) which the leg support module (24; 24b) is mounted on.

4. Flight passenger seating device according to one of the preceding claims, **characterised in that** the leg support module (24; 24b) comprises a cover unit (110), which in at least one operating state covers a region between the seat bottom (12) and the leg support element (26).

5. Flight passenger seating device according to claim 4,
**characterised in that** the cover unit (110) comprises at least one fabric or leather element (112), which in the at least one operating state covers the region between the seat bottom (12) and the leg support element (26).

6. Flight passenger seating device according to one of the preceding claims, **characterised in that** the leg support module (24) comprises at least one reset mechanism (86), which is configured for an automatic reset movement of the leg support element (26) out of a deployed position.

7. Flight passenger seating device according to claim 6,
**characterised in that** the reset mechanism (86) is configured to reset an adjustment of the linear bearing unit (38).

8. Flight passenger seating device according to one of the preceding claims, **characterised in that** the leg support module (24) comprises only one actuator (20), which is configured for adjusting the leg support element (26).

9. Flight passenger seating device according to one of the preceding claims, **characterised in that** the leg support module (24) is connected centrally underneath the seat bottom (12).

10. Flight passenger seating device at least according to claim 6,
**characterised in that** the reset mechanism (86) is in at least one position configured for blocking the linear bearing unit (38).

11. Flight passenger seating device according to one of the preceding claims, **characterised in that** the leg support module (24) comprises at least one life-vest container (128b), which is at least partly integrated in the leg support module (24b).

12. Flight passenger seating device according to one of the preceding claims, **characterised in that** the leg support element (26b) is connected to the transverse element (18b) off-center with respect to the seat bottom (12).

13. Flight passenger seating device according to one of the preceding claims, **characterised in that** the linear bearing unit (38b) comprises at least two parallelrunning guidances (124b, 126b).

## Revendications

1. Dispositif de siège de passager d'aéronef avec un siège de passager d'aéronef (10 ; 10b), comprenant au moins un fond de siège (12) et au moins un module repose-jambe (24 ; 24b), lequel comporte au moins un élément repose-jambe (26 ; 26b), ledit élément repose-jambe (26 ; 26b) étant implémenté de telle façon, qu'il est au moins partiellement mobile par rapport au fond de siège (12), le siège de passager d'aéronef (10 ; 10b) incluant un élément transversal (18 ; 18b), auquel le module repose-jambe (24 ; 24b) est raccordé,
le module repose-jambe (24 ; 24b) comprenant au moins deux unités palier-rotatif (34, 36 ; 34b, 36b) et une unité palier linéaire (38 ; 38b), par le biais desquels l'élément repose-jambe (26 ; 26b) est supporté de façon mobile par rapport au fond de siège (12),
la première unité palier-rotatif (34 ; 34b) étant prévu pour pivoter l'élément repose-jambe (26 ; 26b) par rapport à l'élément transversal (18a), et une distance entre la première unité palier-rotatif (34 ; 34b) et la deuxième unité palier-rotatif (36 ; 36b) étant variable par le biais de l'unité palier-linéaire (38 ; 38b),
**caractérisé en ce que** la deuxième unité palier-rotatif (36 ; 36b) est prévue pour ajuster une orientation de l'élément repose-jambe (26 ; 26b) par rapport au fond de siège (12).

2. Dispositif de siège de passager d'aéronef selon la revendication 1, **caractérisé en ce que** le module repose-jambe (24 ; 24b) est monté directement au siège de passager d'aéronef (10 ; 10b).

3. Dispositif de siège de passager d'aéronef selon l'une quelconque des revendications 1 ou 2, **caractérisé en ce que** le siège de passager d'aéronef (10 ; 10b) comporte au moins une structure de base (22 ; 22b), à laquelle le module repose-jambe (24 ; 24b) est monté.

4. Dispositif de siège de passager d'aéronef selon l'une quelconque des revendications précédentes, **caractérisé en ce que** le module repose-jambe (24 ; 24b) comporte une unité de couverture (110) couvrant, en au moins un état d'opération, une zone entre le fond de siège (12) et l'élément repose-jambe (26).

5. Dispositif de siège de passager d'aéronef selon la revendication 4, **caractérisé en ce que** l'unité de couverture (110) comporte au moins un élément de textile ou de cuir (112) couvrant, en l'au moins un état d'opération, la région entre le fond de siège (12) et l'élément repose-jambe (26).

6. Dispositif de siège de passager d'aéronef selon l'une quelconque des revendications précédentes, **caractérisé en ce que** le module repose-jambe (24) comporte au moins un mécanisme de remis (86) prévu pour un mouvement de remis autonome de l'élément repose-jambe (26), pour une sortie d'une position déployée.

7. Dispositif de siège de passager d'aéronef selon la revendication 6, **caractérisé en ce que** le mécanisme de remis (86) est prévu à remettre l'unité palier-linéaire (38).

8. Dispositif de siège de passager d'aéronef selon l'une quelconque des revendications précédentes, **caractérisé en ce que** le module repose-jambe (24) comporte seulement un actionneur (20), qui est prévu pour un ajustement de l'élément repose-jambe (26).

9. Dispositif de siège de passager d'aéronef selon l'une quelconque des revendications précédentes, **caractérisé en ce que** le module repose-jambe (24) est raccordé centriquement au-dessous du fond de siège (12).

10. Dispositif de siège de passager d'aéronef au moins selon la revendication 6, **caractérisé en ce que** le mécanisme de remis (86) est prévu, dans au moins une position, pour bloquer l'unité palier-linéaire (38).

11. Dispositif de siège de passager d'aéronef selon l'une quelconque des revendications précédentes, **caractérisé en ce que** le module repose-jambe (24) comporte au moins un conteneur de gilet de sauvetage (128b), lequel est au moins partiellement intégré dans le module repose-jambe (24b).

12. Dispositif de siège de passager d'aéronef selon l'une quelconque des revendications précédentes, **caractérisé en ce que** l'élément repose-jambe (26b) est raccordé à l'élément transversal (18b) excentriquement par rapport au fond de siège (12).

13. Dispositif de siège de passager d'aéronef selon l'une quelconque des revendications précédentes, **caractérisé en ce que** l'unité palier-linéaire (38b) comporte au moins deux guidages (124b, 126b) s'étendant en parallèle.
